# EUROPEAN PATENT SPECIFICATION

(11) **EP 3 842 665 B1**
(45) Date of publication and mention of the grant of the patent: **29.06.2022**
(21) Application number: 20209472.8
(22) Date of filing: 24.11.2020
(51) Int. Cl.: F16H 57/04, F16H 63/32

(54) **TRANSMISSION AND VEHICLE**
GETRIEBE UND FAHRZEUG
TRANSMISSION ET VÉHICULE

(30) Priority: 23.12.2019 JP 2019231905
(43) Date of publication of application: 30.06.2021
(73) Proprietor: YAMAHA HATSUDOKI KABUSHIKI KAISHA, Iwata-shi, Shizuoka-ken 438-8501 (JP)
(72) Inventor: NANAHOSHI, Takuma, Iwata-shi, Shizuoka-ken 438-8501 (JP)
(74) Representative: Grünecker Patent- und Rechtsanwälte PartG mbB

(56) References cited:
- EP-A1- 3 336 393
- DE-A1-102018 109 012
- JP-A- 2007 032 649
- JP-B2- 4 994 202

## Description

The present invention relates to a transmission according to the preamble of independent claim 1 and a vehicle. Such a transmission can be taken from the prior art document JP 2007 032649 A.

So-called dog-clutch type stepped transmissions have been used in vehicles such as motorcycles, for example. A dog-clutch type stepped transmission includes a drive shaft to be driven by a drive source such as an internal combustion engine, a driven shaft, a plurality of drive gears that are provided on the drive shaft, and a plurality of driven gears that are provided on the driven shaft and are respectively in mesh with the drive gears. With a dog-clutch type stepped transmission, the gear ratio is changed by changing the combination of a drive gear and a driven gear between which power is transmitted.

With an example of a dog-clutch type stepped transmission, at least one of the driven gears is a movable gear that is unrotatable relative to the driven shaft and movable in the axial direction of the driven shaft, and a driven gear adjacent to this driven gear is a fixed gear that is rotatable relative to the driven shaft and unmovable in the axial direction of the driven shaft. Each movable gear includes protruding portions that protrude toward a fixed gear, and each fixed gear includes depressed portions that engage with the protruding portions. The protruding portions and the depressed portions are called dogs. The transmission further includes shift forks for axially moving the movable gears, a shift fork shaft for axially movably supporting the shift forks, and a shift drum for axially moving the shift forks. A fixed gear receives a driving force from a drive gear that meshes with the fixed gear. However, the fixed gear is rotatable relative to the driven shaft. When the dogs of a movable gear and the dogs of a fixed gear are not in mesh with each other, the fixed gear idles, and the driving force of the drive gear is not transmitted to the driven shaft. On the other hand, when a shift fork moves a movable gear toward a fixed gear, the dogs of the movable gear and the dogs of the fixed gear mesh with each other. In such a case, the driving force of the drive gear is transmitted to the driven shaft through the fixed gear and the movable gear.

With another example of a dog-clutch type stepped transmission (see, for example, JP 2011-112 197 A), the drive gears are supported on the drive shaft so as to be unrotatable and axially unmovable relative to the drive shaft. The driven gears are supported on the driven shaft so as to be axially unmovable and rotatable relative to the driven shaft. The transmission includes slide rings that are attached to the driven shaft so as to be axially movable and unrotatable relative to the driven shaft, and shift forks for axially moving the slide rings, a shift fork shaft for axially movably supporting the shift forks, and a shift drum for axially moving the shift forks. Each driven gear includes dogs that protrude in the axial direction. Each slide ring includes engagement holes into which dogs are inserted. When a slide ring is moved toward a driven gear, the engagement holes of the slide ring engage with the dogs of the driven gear, thereby allowing for transmission of power between the driven gear and the slide ring. Then, power is transmitted in the following order: the drive shaft, the drive gear, the driven gear, the slide ring, and the driven shaft.

In the first example described above, when a movable gear rotates, the movable gear slides on a shift fork. The shift fork includes a slidable portion that slides on the movable gear. In the second example described above, a slide ring slides on a shift fork. The shift fork includes a slidable portion that slides on the slide ring. In either one of the examples, there is a need to supply oil to the slidable portion of the shift fork.

For example, JP 2007-139 070 A describes providing an oil supply pipe separately from the shift fork shaft, and spraying oil from the oil supply pipe to the slidable portion of the shift fork. However, since oil cannot be supplied directly to the slidable portion of the shift fork, the amount of oil supply tends to be insufficient. Moreover, machining of the oil supply pipe is difficult, and the number of parts and the size of the transmission are likely to be large.

On the other hand, JP S58-74956 A discloses a transmission, wherein oil is supplied directly to the slidable portion of the shift fork. With the transmission disclosed in JP S58-74956 A, oil is supplied to the inside of the shift fork shaft. The shift fork shaft includes an oil passage port that is open toward the radial direction at each shift fork support portion. An oil path, which is a narrow through hole that communicates with the oil passage port, is formed inside each shift fork. Oil passes through the oil passage port and the oil path so as to be supplied directly to the slidable portion of the shift fork.

In recent years, there is a demand for reducing the thickness of the shift fork in order to reduce the size of the transmission. However, when the thickness of the shift fork is reduced, it is difficult to machine an oil path, which is a narrow through hole, inside the shift fork. Conversely, when one attempts to machine an oil path, which is a narrow through hole, inside the shift fork, it is difficult to reduce the thickness of the shift fork.

An object of the present invention is to provide a transmission and a vehicle having the same, with which it is possible to supply oil directly to the slidable portion of a shift fork and it is possible to reduce the thickness of the shift fork. According to the present invention said object is solved by a transmission having the features of the independent claim 1. Preferred embodiments are laid down in the dependent claims.

A transmission disclosed herein includes: a first rotating shaft; a second rotating shaft arranged parallel to the first rotating shaft; a first gear attached to the first rotating shaft so as to be unrotatable relative to the first rotating shaft; a second gear that is attached to the second rotating shaft so as to be rotatable and axially unmovable relative to the second rotating shaft and is in mesh with the first gear; a movable member that is attached to the second rotating shaft so as to be unrotatable and axially movable relative to the second rotating shaft and is adjacent to the second gear in an axial direction; a shift fork shaft arranged parallel to the first rotating shaft and the second rotating shaft; and a shift fork that is attached to the shift fork shaft so as to be axially movable relative to the shift fork shaft and configured to move the movable member in the axial direction. One of the second gear and the movable member includes an engagement protruding portion that protrudes in the axial direction, and the other one of the second gear and the movable member includes an engagement depressed portion that detachably engages with the engagement protruding portion. The shift fork includes a cylindrical boss portion through which the shift fork shaft is inserted, a base plate portion extending from the boss portion toward the movable member, a first arm portion extending from the base plate portion toward a side of the movable member, a second arm portion extending from the base plate portion toward a side of the movable member and located on an opposite side from the first arm portion with respect to the movable member, and a slidable portion between the first arm portion and the second arm portion of the base plate portion, wherein the slidable portion slides on the movable member. A dimension of the boss portion in the axial direction is larger than a dimension of the base plate portion in the axial direction. An oil supply path through which oil passes is formed inside the shift fork shaft. The shift fork includes: an oil hole extending in a radial direction through the boss portion so as to communicate with the oil supply path; and a depressed portion formed in the base plate portion, wherein the depressed portion is located outward in the radial direction of the boss portion relative to the oil hole and extends from the oil hole toward the slidable portion, and the depressed portion is depressed in the axial direction of the boss portion.

With the transmission described above, the oil hole of the shift fork is formed in the boss portion, which has a larger dimension in the axial direction than the base plate portion. Therefore, it is possible to provide a sufficiently large oil hole without increasing the thickness of the base plate portion. It is possible to form an oil hole, through which a sufficient amount of oil can be supplied, without increasing the thickness of the shift fork. With the transmission described above, a depressed portion that is depressed in the axial direction of the boss portion is formed in the base plate portion. Oil from the oil hole is guided to the slidable portion through the depressed portion. Therefore, a sufficient amount of oil can be supplied directly and smoothly to the slidable portion of the shift fork without forming a narrow hole that communicates with the slidable portion inside the base plate portion. There is no need to machine a narrow hole inside the base plate portion that extends in the radial direction of the boss portion. Therefore, with the transmission described above, oil can be supplied directly to the slidable portion of the shift fork, and it is possible to reduce the thickness of the shift fork.

With the transmission described above, it is possible to easily machine the oil hole from radially outside of the boss portion by holding a cutting tool such as a drill along the depressed portion of the base plate portion. That is, a cutting tool such as a drill can easily be held against the boss portion from radially outside. Therefore, the oil hole can easily be formed in the boss portion by using a tool such as an angle head.

According to one preferred embodiment, the depressed portion includes a first depressed portion located outward in the radial direction of the boss portion relative to the oil hole, and a second depressed portion extending from the first depressed portion toward the slidable portion. A depth of the first depressed portion is larger than a depth of the second depressed portion.

According to the embodiment described above, the first depressed portion is formed at a position closer to the boss portion than the second depressed portion. The first depressed portion closer to the boss portion is deeper, thus making it easier to machine the oil hole in the boss portion. Moreover, oil from the oil hole can be temporarily stored in the first depressed portion. Oil stored in the first depressed portion is desirably supplied to the slidable portion through the second depressed portion.

According to one preferred embodiment, the second depressed portion extends straight in the radial direction of the boss portion.

According to the embodiment described above, oil stored in the first depressed portion is supplied smoothly toward the slidable portion.

According to one preferred embodiment, the first depressed portion is formed in a hemispherical shape.

According to the embodiment described above, as compared with a case where the first depressed portion is formed in a narrow groove shape, it is easier to machine the oil hole in the boss portion. Oil from the oil hole can be desirably stored in the first depressed portion, and oil can be desirably supplied to the slidable portion through the second depressed portion.

According to one preferred embodiment, a dimension of the first depressed portion in the radial direction of the boss portion is twice or more of a diameter of the oil hole.

According to the embodiment described above, since the first depressed portion is relatively large, it is easy to machine the oil hole in the boss portion. Oil from the oil hole can be desirably stored in the first depressed portion, and oil can be desirably supplied to the slidable portion through the second depressed portion.

According to one preferred embodiment, the boss portion includes an inner circumferential surface and an outer circumferential surface. A portion of the outer circumferential surface where the oil hole is formed is a surface that is perpendicular to the radial direction of the boss portion.

If a cutting tool can be held perpendicular against the outer circumferential surface of the boss portion, it is easier to form the oil hole in the boss portion. According to the embodiment described above, a portion of the outer circumferential surface of the boss portion where the oil hole is formed is a surface that is perpendicular to the radial direction of the boss portion. Thus, it is easy to machine the oil hole in the boss portion.

According to one preferred embodiment, a maximum depth of the depressed portion is three times or more of a radius of the oil hole.

According to the embodiment described above, since the depressed portion is relatively large, it is easy to machine the oil hole in the boss portion. A sufficient amount of oil can be supplied to the slidable portion from the oil hole through the depressed portion.

According to one preferred embodiment, a maximum dimension of the depressed portion in a direction that is perpendicular to the radial direction of the boss portion and the axial direction of the boss portion is twice or more of a diameter of the oil hole.

According to the embodiment described above, since the depressed portion is relatively large, it is easy to machine the oil hole in the boss portion. A sufficient amount of oil can be supplied to the slidable portion from the oil hole through the depressed portion.

According to one preferred embodiment, a minimum dimension of the depressed portion in a direction that is perpendicular to the radial direction of the boss portion and the axial direction of the boss portion is larger than a diameter of the oil hole.

According to the embodiment described above, since the depressed portion is relatively large, it is easy to machine the oil hole in the boss portion. A sufficient amount of oil can be supplied to the slidable portion from the oil hole through the depressed portion.

According to one preferred embodiment, a dimension of the depressed portion in the radial direction of the boss portion is smaller than a half of a dimension from a center of the oil hole to a distal end of the first arm portion.

According to the embodiment described above, the depressed portion is relatively short. Since the length from the oil hole of the boss portion to the slidable portion is relatively short, oil can be desirably supplied to the slidable portion from the oil hole.

According to one preferred embodiment, the movable member includes an outer circumferential surface including a groove formed thereon that is depressed radially inward. The slidable portion includes a plate-shaped engagement plate portion extending from the base plate portion toward the movable member. A distal end portion of the first arm portion of the shift fork, a distal end portion of the second arm portion and the engagement plate portion are in slidable engagement with the groove of the movable member. The engagement plate portion includes another depressed portion that is depressed in the axial direction of the boss portion and extends from the depressed portion toward the movable member.

According to the embodiment described above, the distal end portion of the first arm portion and the distal end portion of the second arm portion engage with the groove of the movable member, and the engagement plate portion engages with the groove of the movable member. Therefore, the shift fork can stably support the movable member. In a gear-shifting operation, the shift fork can stably move the movable member, thereby realizing a desirable gear-shifting operation. Oil from the oil hole flows through the depressed portion and the other depressed portion in this order to be guided to the groove of the movable member. Therefore, oil can be desirably guided to the groove of the movable member.

According to one preferred embodiment, the movable member is an annular member arranged concentric with the second rotating shaft. The annular member is not in mesh with the first gear attached to the first rotating shaft.

According to the embodiment described above, the annular member does not need teeth for meshing with the first gear attached to the first rotating shaft. Therefore, as compared with a case where the movable member is a gear that meshes with the first gear attached to the first rotating shaft, it is possible to reduce the thickness of the movable member. Thus, by reducing the thickness of the movable member and the shift fork, it is possible to reduce the size of the transmission.

According to one preferred embodiment, the engagement protruding portion is formed on the second gear. The engagement depressed portion is a through hole formed in the annular member.

According to the embodiment described above, it is possible to reduce the thickness of the annular member. Thus, by reducing the thickness of the movable member and the shift fork, it is possible to reduce the size of the transmission.

A vehicle disclosed herein includes: the transmission described above; a drive source that is linked to the first rotating shaft and drives the first rotating shaft; a power transmitting member that is linked to the second rotating shaft; and a driving wheel that is linked to the power transmitting member.

### ADVANTAGEOUS EFFECTS OF INVENTION

According to the present invention, it is possible to provide a transmission and a vehicle having the same, with which it is possible to supply oil directly to the slidable portion of the shift fork and it is possible to reduce the thickness of the shift fork.

### BRIEF DESCRIPTION OF DRAWINGS

FIG. 1 is a side view of a motorcycle according to an embodiment.
FIG. 2 is a cross-sectional view of an internal combustion engine of the motorcycle.
FIG. 3 is a cross-sectional view of a part of a transmission.
FIG. 4 is a front view of a part of a transmission.
FIG. 5a is a front view of a slide ring, and FIG. 5b is a cross-sectional view taken along line Vb-Vb of FIG. 5a.
FIG. 6a is a front view of a collar, and FIG. 6b is a cross-sectional view taken along line Vlb-Vlb of FIG. 6a.
FIG. 7 is a view of a slide ring and a driven gear as seen along the axial direction.
FIG. 8 is a cross-sectional view of another portion of the transmission.
FIG. 9 is a plan view of a shift fork shaft.
FIG. 10 is a cross-sectional view showing the vicinity of a first end portion of the shift fork shaft.
FIG. 11 is a cross-sectional view showing the vicinity of a second end portion of the shift fork shaft.
FIG. 12 is a front view of a shift fork.
FIG. 13 is a cross-sectional view taken along line XIII-XIII of FIG. 12.
FIG. 14 is an enlarged cross-sectional view of a portion of the shift fork shaft and the shift fork.
FIG. 15 is a cross-sectional view taken along line XV-XV of FIG. 14.
FIG. 16 is a perspective view of a portion of the shift fork.
FIG. 17 is a view illustrating an example of a method for machining an oil hole of a boss portion of the shift fork.

### DESCRIPTION OF EMBODIMENTS

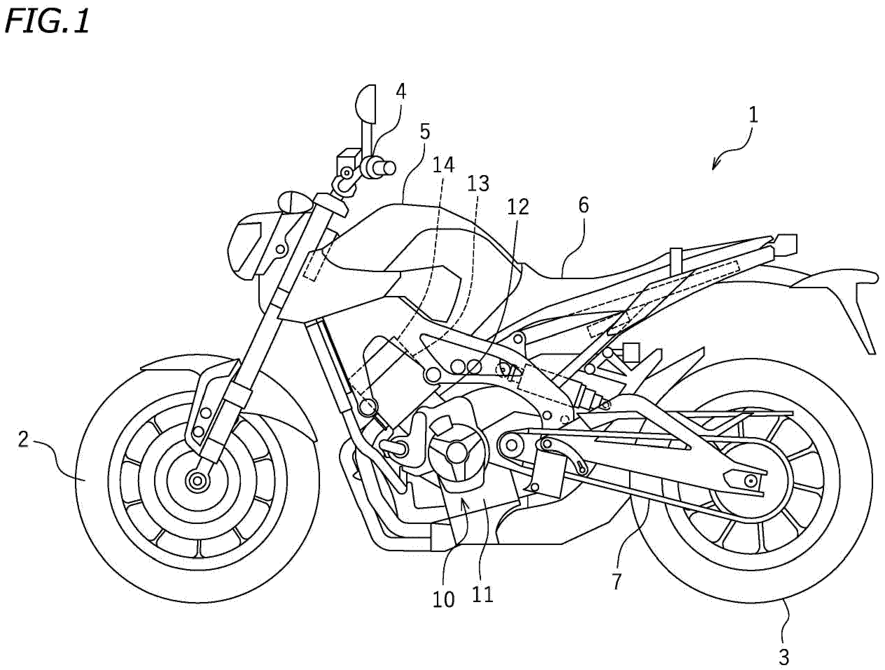

Embodiments will now be described with reference to the drawings. FIG. 1 is a side view of a motorcycle 1, which is an example of the vehicle. The motorcycle 1 includes a front wheel 2, a rear wheel 3, an internal combustion engine (hereinafter "engine") 10, a handle 4, a fuel tank 5, and a seat 6. The engine 10 is linked to the rear wheel 3 by a chain 7. The rear wheel 3 is driven by the engine 10. The engine 10, the rear wheel 3, and the chain 7 are an example of the "drive source", an example of the "driving wheel", and an example of the "power transmitting member", respectively.

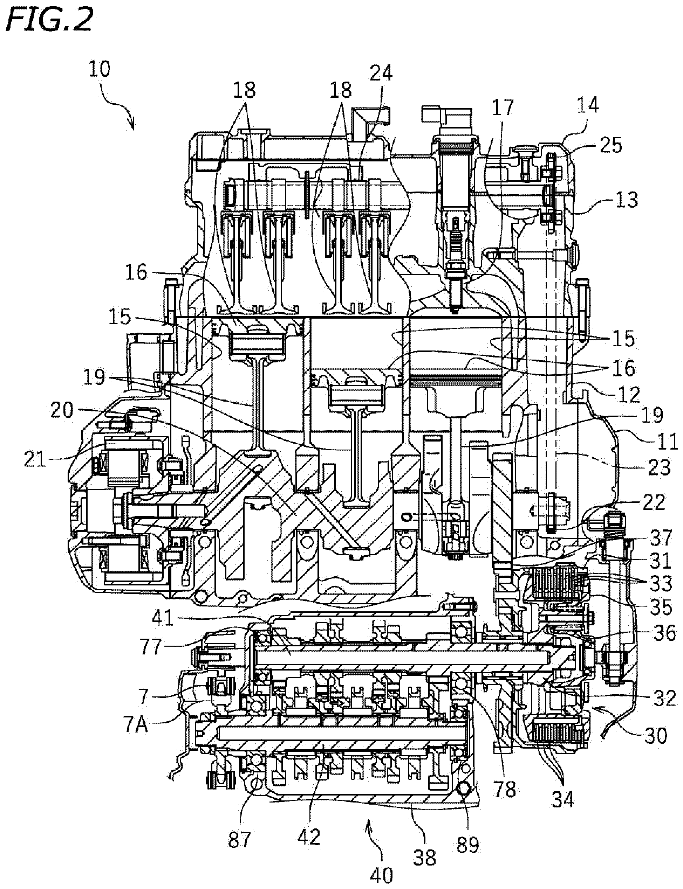

As shown in FIG. 2, the engine 10 includes a crankcase 11, a cylinder body 12 connected to the crankcase 11, a cylinder head 13 connected to the cylinder body 12, and a cylinder head cover 14 connected to the cylinder head 13. The engine 10 is a multi-cylinder engine including a plurality of cylinders 15. Herein, the engine 10 is a 3-cylinder engine. Note however that there is no limitation thereto. The engine 10 may be a single-cylinder engine including only one cylinder 15. The engine 10 may be a water-cooled engine or may be an air-cooled engine.

The cylinder head 13 is provided with an ignitor 17, an intake valve (not shown) and an exhaust valve 18. The cylinders 15 are provided inside the cylinder body 12. Pistons 16 are accommodated inside the cylinders 15. The pistons 16 are linked to a crankshaft 20 via connecting rods 19. The crankshaft 20 is arranged inside the crankcase 11. The crankshaft 20 extends in the vehicle width direction. Herein, the crankshaft 20 extends leftward and rightward. A generator 21 is attached to the left end portion of the crankshaft 20. A sprocket 22 is attached to the right end portion of the crankshaft 20. A cam chain 23 is wound around the sprocket 22. Moreover, the cam chain 23 is wound around a sprocket 25 attached to a camshaft 24.

The motorcycle 1 includes a clutch 30. The clutch 30 is attached to a drive shaft 41. Herein, the clutch 30 is attached to the right end portion of the drive shaft 41. The clutch 30 includes a clutch housing 31 that is rotatably attached to the drive shaft 41, a clutch boss 32 that is unrotatably attached to the drive shaft 41, a plurality of first clutch plates 33 that are provided in the clutch housing 31, a plurality of second clutch plates 34 that are provided on the clutch boss 32, and a pressure plate 35 arranged rightward of the first clutch plates 33 and the second clutch plates 34. The pressure plate 35 is configured to be movable in the axial direction of the drive shaft 41 and is urged leftward by a spring 36.

The clutch housing 31 is in mesh with a gear 37 provided on the crankshaft 20. The clutch housing 31 rotates together with the crankshaft 20. When the clutch 30 is connected, the torque of the crankshaft 20 is transmitted to the drive shaft 41, and the drive shaft 41 is driven by the crankshaft 20. When the clutch 30 is disconnected, the transmission of the torque from the crankshaft 20 to the drive shaft 41 is cut off.

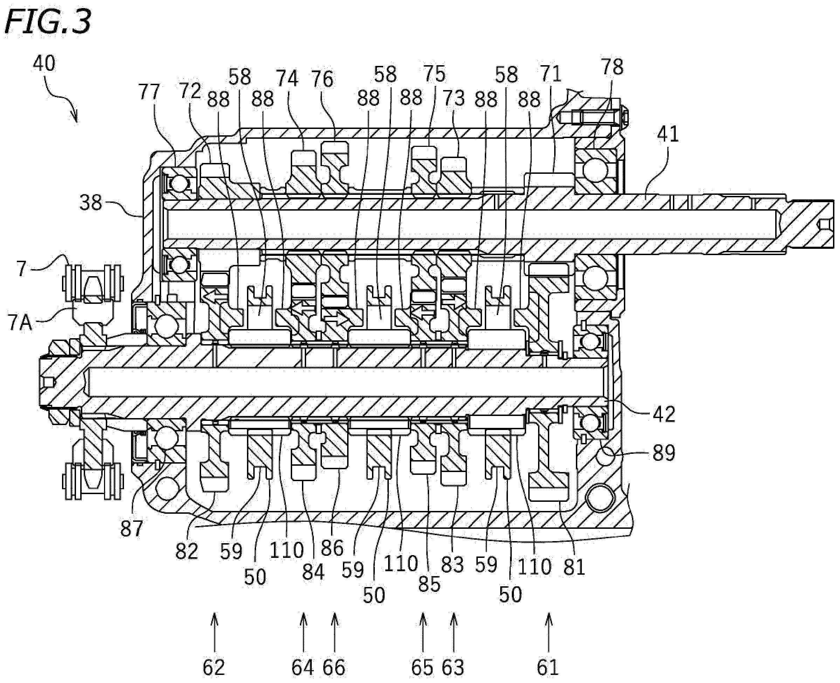

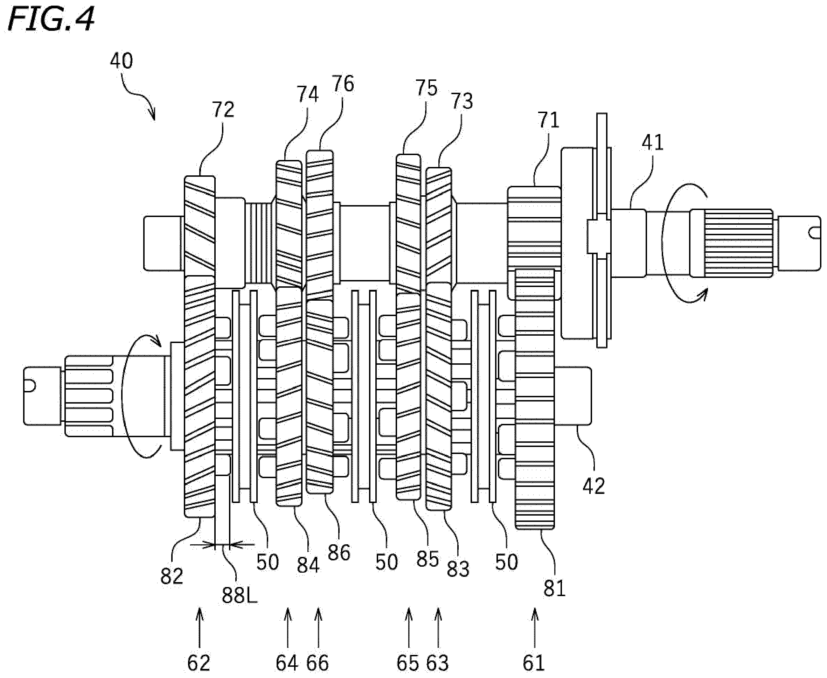

The motorcycle 1 includes a transmission 40. As shown in FIG. 3 and FIG. 4, the transmission 40 includes a transmission case 38, the drive shaft 41, a driven shaft 42, a plurality of drive gears 71 to 76, a plurality of driven gears 81 to 86, and a plurality of slide rings 50. The transmission case 38 is formed integral with the crankcase 11. The drive shaft 41 and the driven shaft 42 are arranged parallel to the crankshaft 20. The drive shaft 41 and the driven shaft 42 are arranged parallel to each other. In the following description, the axial direction of the drive shaft 41 and the driven shaft 42 may be referred to simply as the "axial direction". As shown in FIG. 3, a sprocket 7A with the chain 7 wound around is attached to the driven shaft 42.

In the present embodiment, the drive shaft 41 corresponds to the "first rotating shaft", and the driven shaft 42 corresponds to the "second rotating shaft". The drive gears 71 to 76 correspond to the "first gear", and the driven gears 81 to 86 correspond to the "second gear". The slide rings 50 correspond to the "annular member". The slide rings 50 are arranged concentric with the driven shaft 42. The slide rings 50 are not in mesh with the first gears 71 to 76 attached to the drive shaft 41. The slide rings 50 are not in mesh with the second gears 81 to 86 attached to the driven shaft 42.

As shown in FIG. 3, the drive shaft 41 is rotatably supported by a bearing 77 and a bearing 78. The driven shaft 42 is rotatably supported by a bearing 87 and a bearing 89. The bearings 77, 78, 87 and 89 are secured to the transmission case 38.

In the present embodiment, the transmission 40 is a stepped transmission having six speeds. Note however that the number of speeds of the transmission 40 is not limited to six. The transmission 40 includes the drive gears 71 to 76 for the first to sixth speeds. The drive gears 71 to 76 are attached to the drive shaft 41 so as to be unrotatable and axially unmovable relative to the drive shaft 41. The drive gears 71 to 76 are configured so as to rotate together with the drive shaft 41. The diameters of the drive gears 71 to 76 increase in this order. That is, diameter of first-speed drive gear 71 < diameter of second-speed drive gear 72 < diameter of third-speed drive gear 73 < diameter of fourth-speed drive gear 74 < diameter of fifth-speed drive gear 75 < diameter of sixth-speed drive gear 76.

The transmission 40 includes driven gears 81 to 86 for the first speed to the sixth speed. The driven gears 81 to 86 are attached to the driven shaft 42 so as to be rotatable and axially unmovable relative to the driven shaft 42. The driven gears 81 to 86 are configured so that they can idle on the driven shaft 42. The diameters of the driven gears 81 to 86 decrease in this order. That is, diameter of first-speed driven gear 81 > diameter of second-speed driven gear 82 > diameter of third-speed driven gear 83 > diameter of fourth-speed driven gear 84 > diameter of fifth-speed driven gear 85 > diameter of sixth-speed driven gear 86.

The drive gears 71 to 76 for the first speed to the sixth speed are in mesh with the driven gears 81 to 86 for the first speed to the sixth speed, respectively, thereby forming transmission gear pairs 61 to 66 for the first speed to the sixth speed, respectively. The reduction ratios of the transmission gear pairs 61 to 66 for the first speed to the sixth speed decrease in this order. That is, reduction ratio of first transmission gear pair 61 > reduction ratio of second transmission gear pair 62 > reduction ratio of third transmission gear pair 63 > reduction ratio of fourth transmission gear pair 64 > reduction ratio of fifth transmission gear pair 65 > reduction ratio of sixth transmission gear pair 66.

The slide rings 50 are attached to the driven shaft 42 so as to be unrotatable and axially movable relative to the driven shaft 42. The slide rings 50 are configured so as to rotate together with the driven shaft 42. In the present embodiment, three slide rings 50 are attached to the driven shaft 42. The left slide ring 50 is arranged between the second-speed driven gear 82 and the fourth-speed driven gear 84. The middle slide ring 50 is arranged between the sixth-speed driven gear 86 and the fifth-speed driven gear 85. The right slide ring 50 is arranged between the third-speed driven gear 83 and the first-speed driven gear 81.

As shown in FIG. 3, while the drive gears 71 to 76 do not include dogs, the driven gears 81 to 86 include dogs 88 protruding in the axial direction. The dogs 88 of the driven gears 81 to 86 protrude toward the slide rings 50. The dogs 88 are an example of the "engagement protruding portion".

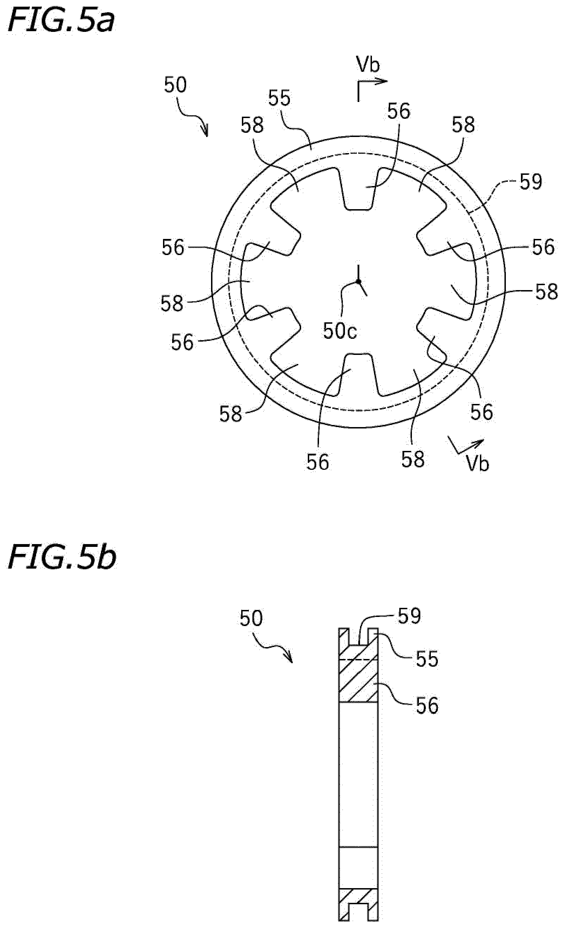

While the configurations of the three slide rings 50 may be different from each other, they have the same configuration herein. Next, referring to FIG. 5a and FIG. 5b, the configuration of the slide rings 50 will be described.

FIG. 5a is a front view of the slide ring 50, and FIG. 5b is a cross-sectional view taken along line Vb-Vb of FIG. 5a. As shown in FIG. 5a, the slide ring 50 includes an annular portion 55 concentric with the driven shaft 42, and a plurality of protruding portions 56 extending radially inward from the annular portion 55. The protruding portions 56 are arranged next to each other in the circumferential direction. The slide ring 50 includes engagement holes 58, delimited by the annular portion 55 and the protruding portions 56, into which the dogs 88 are inserted. Herein, the slide ring 50 includes six engagement holes 58. The radially outward end of the engagement holes 58 is delimited by the annular portion 55. The opposing ends of the engagement holes 58 in the circumferential direction are delimited by protruding portions 56. The radially inward end of the engagement holes 58 is open. The engagement holes 58 are through holes extending in the axial direction of the slide ring 50. The engagement holes 58 are an example of the "engagement depressed portion".

As shown in FIG. 5b, a groove 59 is formed on the outer circumferential surface of the slide ring 50. The groove 59 is depressed radially inward and extends in the circumferential direction.

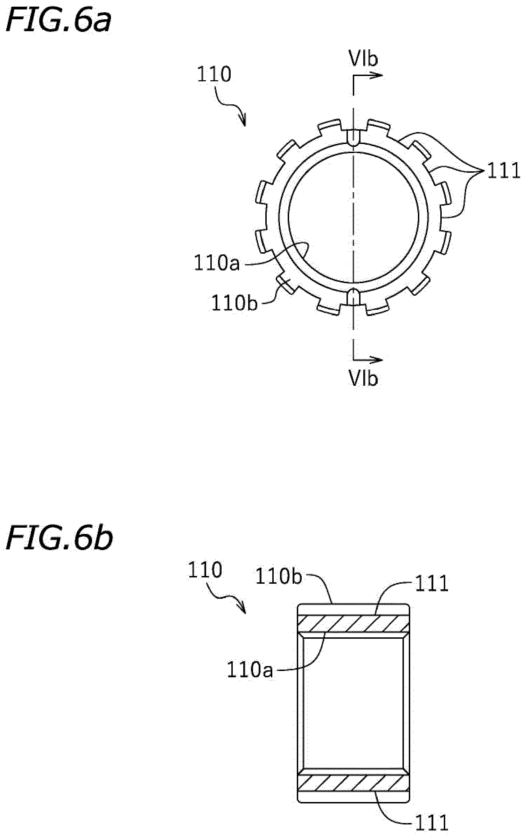

As shown in FIG. 3, a cylindrical collar 110 is interposed between the slide ring 50 and the driven shaft 42. The slide ring 50 is attached to the driven shaft 42 with the collar 110 therebetween. FIG. 6a is a front view of the collar 110, and FIG. 6b is a cross-sectional view taken along line Vlb-Vlb of FIG. 6a. The collar 110 includes an inner circumferential portion 110a, which engages with the driven shaft 42 so as to be unrotatable and axially unmovable relative to the driven shaft 42, and an outer circumferential portion 110b including a plurality of depressed portions 111 formed thereon.

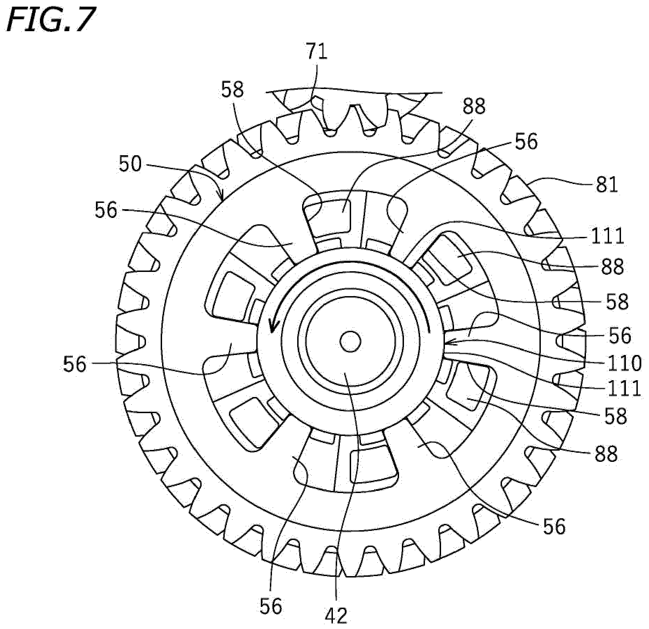

As shown in FIG. 7, the distal end portion of the protruding portion 56 of the slide ring 50 is inserted into the depressed portion 111 of the collar 110. The protruding portion 56 engages with the outer circumferential portion 110b of the collar 110. The slide ring 50 engages with the collar 110 so as to be axially slidable and circumferentially unslidable relative to the collar 110. The collar 110 is secured to the driven shaft 42 so as to rotate together with the driven shaft 42. Therefore, the slide ring 50 rotates together with the driven shaft 42 and the collar 110.

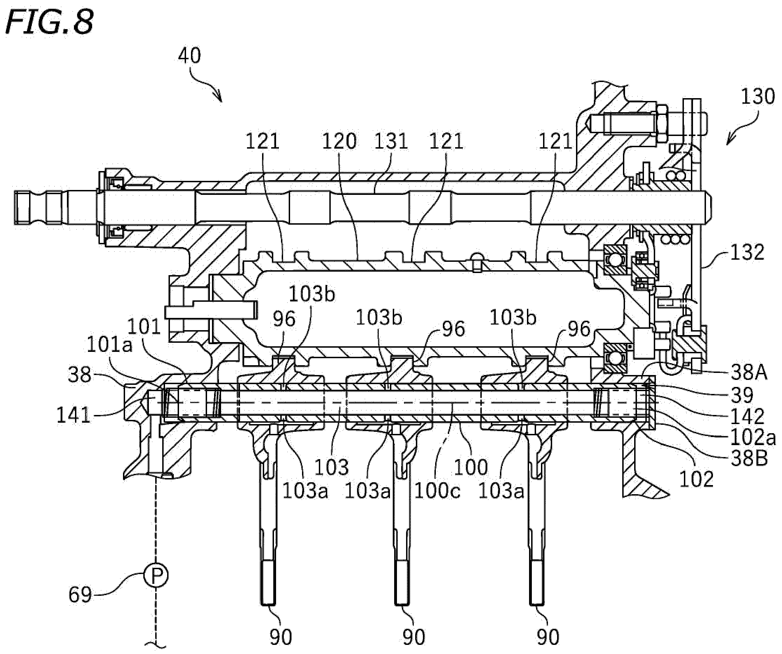

As shown in FIG. 8, the transmission 40 includes three shift forks 90, a shift fork shaft 100 that supports the shift forks 90, a shift drum 120 that engages with the shift forks 90, and a rotating mechanism 130 that rotates the shift drum 120 stepwise.

The shift drum 120 and the shift fork shaft 100 are arranged parallel to the drive shaft 41 and the driven shaft 42. The shift drum 120 includes grooves 121 that engage with protruding portions 96 of the shift forks 90. The rotating mechanism 130 includes a shift shaft 131 that is arranged parallel to the shift drum 120, and an arm 132 that transmits the rotation of the shift shaft 131 to the shift drum 120. Note that the shift drum 120 and the rotating mechanism 130 may be those that have been well known in the art. Since the configurations of the shift drum 120 and the rotating mechanism 130 are well known in the art, they will not be described below.

Although the details will be described later, the shift forks 90 are in engagement with grooves 59 of the slide rings 50. As the shift drum 120 rotates, the shift forks 90 move leftward or rightward along the grooves 121 of the shift drum 120. Together with this, the slide rings 50 in engagement with the shift forks 90 move leftward or rightward. The shift forks 90 are attached to the shift fork shaft 100 so as to be axially movable relative to the shift fork shaft 100, and are configured to axially move the slide rings 50.

As shown in FIG. 3, the right slide ring 50 is arranged leftward of the first-speed driven gear 81. When this slide ring 50 moves rightward, the dogs 88 of the driven gear 81 are inserted into the engagement holes 58 of the slide ring 50. The driven gear 81 is always rotating since it is in mesh with the drive gear 71. Therefore, as shown in FIG. 7, the dogs 88 revolve around the center of the driven shaft 42, and are in contact with the protruding portions 56 of the slide ring 50. As the protruding portions 56 are pushed by the dogs 88, power is transmitted from the driven gear 81 to the slide ring 50, and the slide ring 50 rotates together with the driven gear 81. As the dogs 88 engage with the engagement holes 58, power is transmitted from the drive shaft 41 to the driven shaft 42 via the first-speed transmission gear pair 61, thus driving the driven shaft 42. Although details will be omitted, this similarly applies to the second-speed to sixth-speed transmission gear pairs 62 to 66.

With the transmission 40 according to the present embodiment, oil can be supplied directly to the slidable portion of each shift fork 90 that slides on the slide ring 50 through the shift fork shaft 100 and the shift fork 90. Next, a detailed configuration of the shift fork shaft 100 and the shift forks 90 will be described.

First, the shift fork shaft 100 will be described. As shown in FIG. 8, the opposite end portions of the shift fork shaft 100 are open. Specifically, a first opening 101a, which is open leftward, is formed at a first end portion 101 of the shift fork shaft 100. A second opening 102a, which is open rightward, is formed at a second end portion 102 of the shift fork shaft 100. The first opening 101a and the second opening 102a are open in the axial direction of the shift fork shaft 100. The second opening 102a is open in the opposite way in the axial direction to the first opening 101a. An oil supply path 103 extends in the axial direction from the first opening 101a to the second opening 102a inside the shift fork shaft 100.

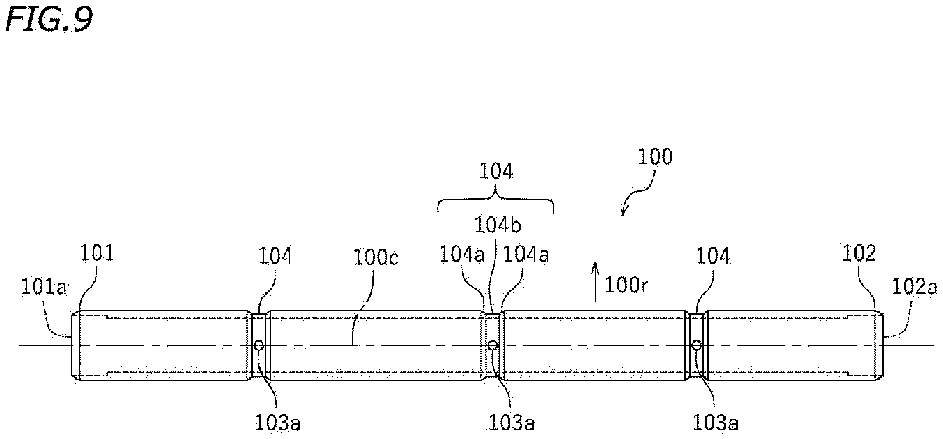

FIG. 9 is a plan view of the shift fork shaft 100. The shift fork shaft 100 includes circumferential grooves 104 each making a complete round around the shift fork shaft 100. The circumferential groove 104 is formed in such a shape that the width thereof increases while extending outward 100r in the radial direction of the shift fork shaft 100. As seen on a cross section including the axial line 100c of the shift fork shaft 100, the circumferential groove 104 includes a bottom surface 104b that is parallel to the axial line 100c of the shift fork shaft 100, and an inclined surface 104a that is inclined relative to the bottom surface 104b so as to extend away from the bottom surface 104b while extending outward 100r in the radial direction of the shift fork shaft 100. The number of the circumferential grooves 104 is equal to the number of the shift forks 90. In the present embodiment, since the transmission 40 includes three shift forks 90, there are three circumferential grooves 104 formed on the shift fork shaft 100.

As shown in FIG. 8, the shift fork shaft 100 includes oil supply holes 103a extending in the radial direction. Each oil supply hole 103a is open on the bottom surface 104b of the circumferential groove 104 (see FIG. 9). The oil supply hole 103a connects between the oil supply path 103 and the circumferential groove 104. The shift fork shaft 100 also includes other oil supply holes 103b that are located on the opposite side from the oil supply holes 103a with respect to the axial line 100c. Each oil supply hole 103b extends also in the radial direction and connects between the oil supply path 103 and the circumferential groove 104.

The shift fork shaft 100 is supported on the transmission case 38. The transmission case 38 includes a first hole portion 141 and a second hole portion 142. The first end portion 101 of the shift fork shaft 100 is inserted into the first hole portion 141. The second end portion 102 of the shift fork shaft 100 is inserted into the second hole portion 142.

The first hole portion 141 communicates with the oil supply path 103 inside the shift fork shaft 100 through the first opening 101a. The first hole portion 141 communicates also with an oil pump 69 for supplying oil. Although not shown in the drawings, an oil pan for storing oil is provided at the bottom of the crankcase 11. Oil stored in the oil pan is supplied to the first hole portion 141 by the oil pump 69. The second hole portion 142 communicates with the oil supply path 103 through the second opening 102a.

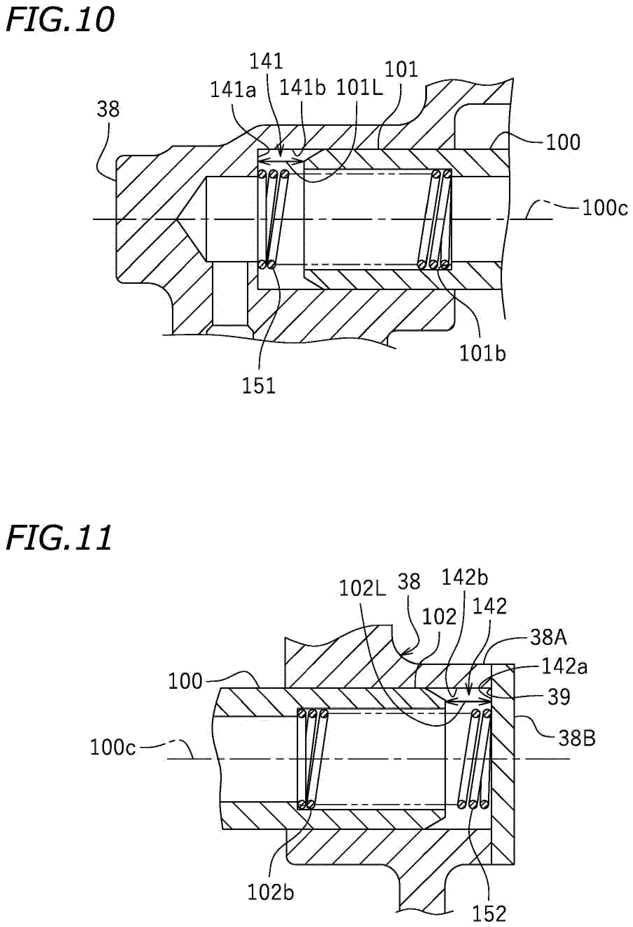

As shown in FIG. 10, the first hole portion 141 includes a first far-end wall portion 141a that is perpendicular to the axial direction of the shift fork shaft 100, and a first circumferential wall portion 141b that extends in the axial direction from the first far-end wall portion 141a.

As shown in FIG. 8, the transmission case 38 includes a case body 38A and a lid member 38B. The case body 38A includes a through hole 39 that connects between the inside and the outside of the transmission case 38. The lid member 38B is secured to the case body 38A, and covers the through hole 39. While there is no particular limitation to the method for securing the lid member 38B to the case body 38A, it may be welding, for example. The second hole portion 142 includes the through hole 39 and the lid member 38B. As shown in FIG. 11, the second hole portion 142 includes a second far-end wall portion 142a that is perpendicular to the axial direction of the shift fork shaft 100, and a second circumferential wall portion 142b that extends in the axial direction from the second far-end wall portion 142a. The second far-end wall portion 142a is the inner surface of the lid member 38B. The second circumferential wall portion 142b is the inner circumferential surface of the through hole 39 of the case body 38A.

As shown in FIG. 10, at least a portion of a first spring 151 is arranged inside the first hole portion 141. At least a portion of the first spring 151 is interposed between the first far-end wall portion 141a and the first end portion 101 of the shift fork shaft 100. In the present embodiment, a stepped surface 101b, which supports the right end portion of the first spring 151, is formed inside the first end portion 101 of the shift fork shaft 100. The right end portion of the first spring 151 is supported on the stepped surface 101b. The left end portion of the first spring 151 is supported on the first far-end wall portion 141a. In the present embodiment, the first spring 151 is a compression coil spring. The first spring 151 urges the shift fork shaft 100 rightward. Note however that there is no limitation as long as the first spring 151 urges the shift fork shaft 100 toward the second hole portion 142. The first spring 151 is not limited to a compression coil spring.

As shown in FIG. 11, at least a portion of a second spring 152 is arranged inside the second hole portion 142. At least a portion of the second spring 152 is interposed between the second far-end wall portion 142a and the second end portion 102 of the shift fork shaft 100. In the present embodiment, a stepped surface 102b, which supports the left end portion of the second spring 152, is formed inside the second end portion 102 of the shift fork shaft 100. The left end portion of the second spring 152 is supported on the stepped surface 102b. The right end portion of the second spring 152 is supported on the second far-end wall portion 142a. In the present embodiment, the second spring 152 is a compression coil spring. The second spring 152 urges the shift fork shaft 100 leftward. Note however that there is no limitation as long as the second spring 152 urges the shift fork shaft 100 toward the first hole portion 141. The second spring 152 is not limited to a compression coil spring.

The first spring 151 and the second spring 152 are an example of the urging member that keeps the shift fork shaft 100 in a neutral position where the shift fork shaft 100 is spaced apart from the first far-end wall portion 141a and the second far-end wall portion 142a. FIG. 8 shows a state where the shift fork shaft 100 is in the neutral position. The shift fork shaft 100 being in the neutral position can move either leftward or rightward. When the shift fork shaft 100 moves leftward, the first spring 151 and the second spring 152 urge the shift fork shaft 100 rightward, and when the shift fork shaft 100 moves rightward, the first spring 151 and the second spring 152 urge the shift fork shaft 100 leftward. In other words, when the shift fork shaft 100 moves from the neutral position toward the first hole portion 141, the first spring 151 and the second spring 152 urge the shift fork shaft 100 toward the second hole portion 142, and when the shift fork shaft 100 moves from the neutral position toward the second hole portion 142, the first spring 151 and the second spring 152 urge the shift fork shaft 100 toward the first hole portion 141.

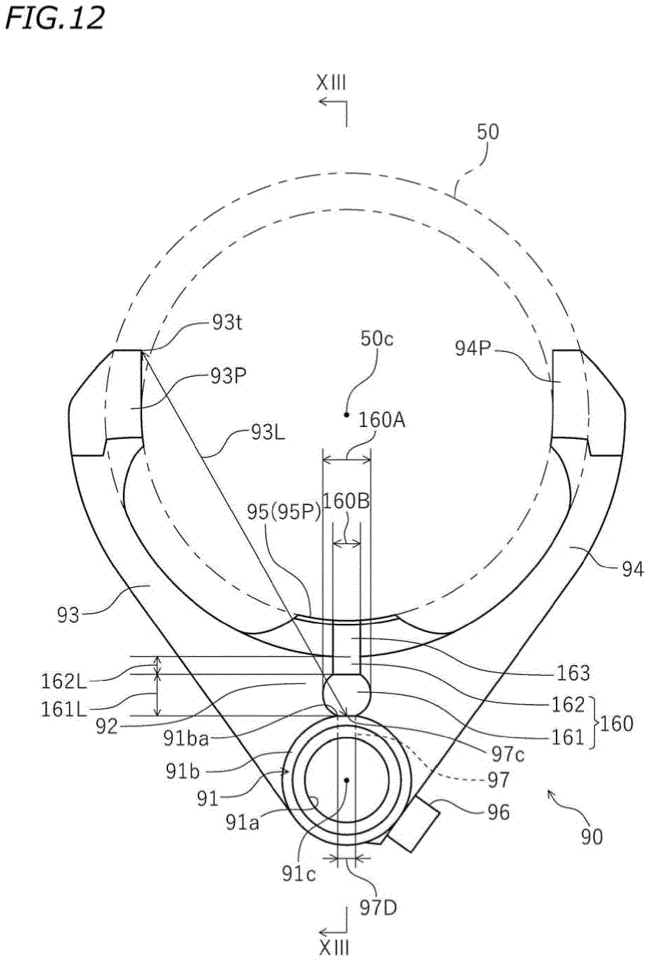

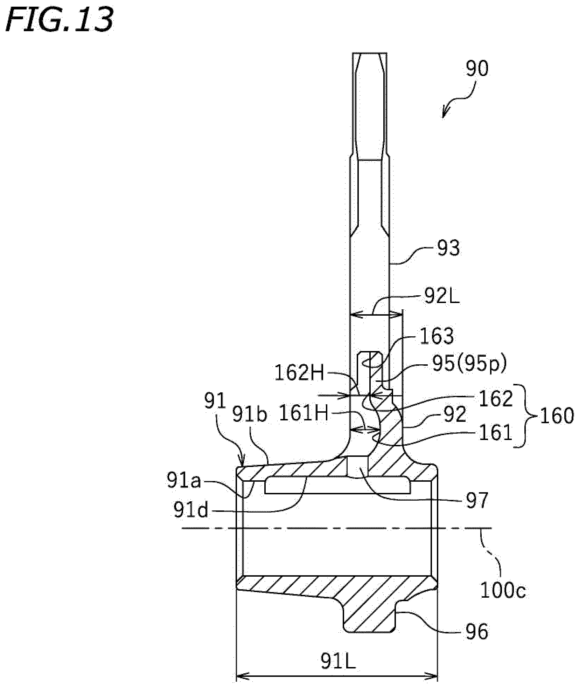

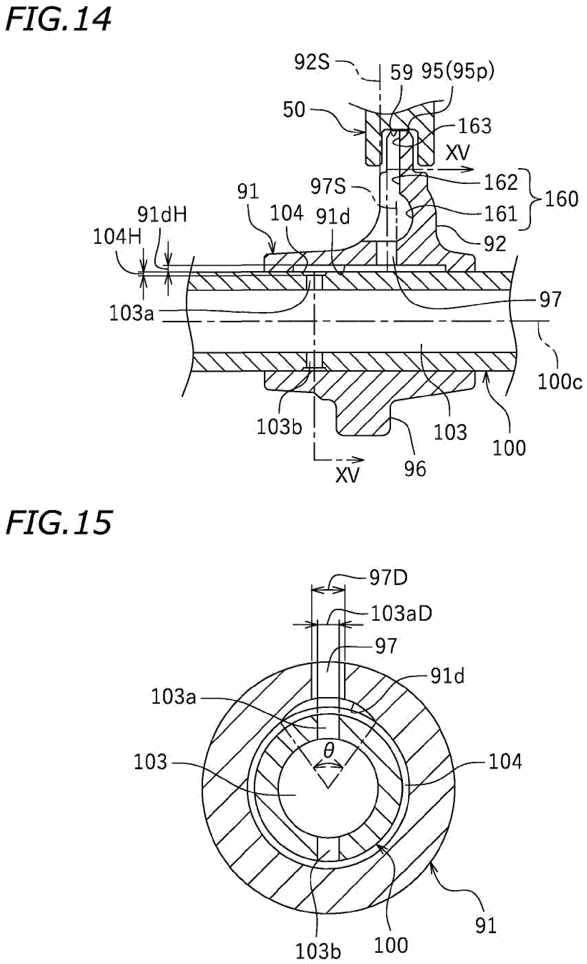

Next, the configuration of the shift forks 90 will be described. FIG. 12 is a front view of the shift forks 90. FIG. 13 is a cross-sectional view taken along line XIII-XIII of FIG. 12. FIG. 14 is an enlarged cross-sectional view of a portion of the shift fork shaft 100 and the shift fork 90. FIG. 15 is a cross-sectional view taken along line XV-XV of FIG. 14. As shown in FIG. 12, the shift fork 90 includes a cylindrical boss portion 91 into which the shift fork shaft 100 is inserted, a base plate portion 92 extending from the boss portion 91 toward the slide ring 50, a first arm portion 93 and a second arm portion 94 extending from the base plate portion 92 toward the side of the slide ring 50, and a slidable portion 95 extending from the base plate portion 92 outward in the radial direction of the boss portion 91. The shift fork 90 also includes the protruding portion 96 that engages with the groove 121 of the shift drum 120. The second arm portion 94 is located on the opposite side from the first arm portion 93 with respect to the slide ring 50. The slidable portion 95 is provided on a portion of the base plate portion 92 between the first arm portion 93 and the second arm portion 94.

As shown in FIG. 13, a dimension 91L of the boss portion 91 in the axial direction is larger than a dimension 92L of the base plate portion 92 in the axial direction. 91L>92L.

The axial line of the boss portion 91 coincides with the axial line 100c of the shift fork shaft 100. In the following description, the axial line of the boss portion 91 will be denoted also by designation 100c. The boss portion 91 includes an inner circumferential surface 91a and an outer circumferential surface 91b. The boss portion 91 includes an oil hole 97 extending in the radial direction of the boss portion 91. The oil hole 97 runs through the boss portion 91 from the inner circumferential surface 91a to the outer circumferential surface 91b. As shown in FIG. 12, a portion 91ba of the outer circumferential surface 91b where the oil hole 97 is formed is a perpendicular surface that is perpendicular to the radial direction of the boss portion 91. As shown in FIG. 15, the oil hole 97 communicates with the oil supply path 103 of the shift fork shaft 100.

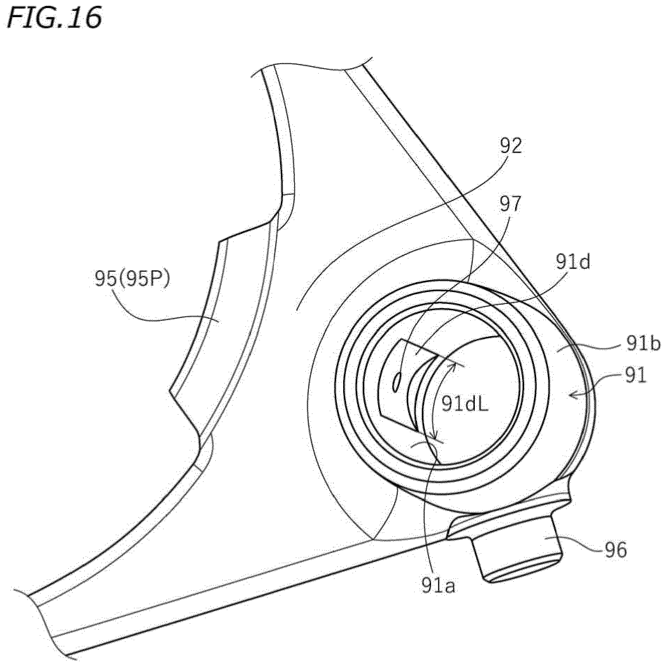

A depressed portion 91d is formed on the inner circumferential surface 91a of the boss portion 91. As shown in FIG. 13, the depressed portion 91d extends in the axial direction of the boss portion 91. As shown in FIG. 16, the depressed portion 91d is formed to extend in the circumferential direction over an extent of 180° or less. Herein, the depressed portion 91d is formed to extend in the circumferential direction over an extent of 90° or less the inner circumferential surface 91a of the boss portion 91. Note however that there is no particular limitation to the circumferential extent of the depressed portion 91d. The depressed portion 91d may be formed over an extent of 45° to 90°, or over an extent of 30° to 90°, around the center of the boss portion 91. As shown in FIG. 15, as seen on a cross section that is perpendicular to the axial direction of the boss portion 91, the depressed portion 91d is formed in a crescent shape. Note that designation θ represents the angle of the depressed portion 91d around the center of the boss portion 91.

As shown in FIG. 14, the depressed portion 91d overlaps with the circumferential groove 104 of the shift fork shaft 100. In other words, at least a portion of the depressed portion 91d is located rightward relative to the left end portion of the circumferential groove 104 and leftward relative to the right end portion of the circumferential groove 104.

A circumferential dimension 91dL of the depressed portion 91d (see FIG. 16) is larger than a diameter 103aD of the oil supply hole 103a of the shift fork shaft 100 (see FIG. 15). The circumferential dimension 91dL of the depressed portion 91d is larger than a diameter 97D of the oil hole 97 of the boss portion 91. The diameter 97D of the oil hole 97 of the boss portion 91 is larger than the diameter 103aD of the oil supply hole 103a of the shift fork shaft 100. As shown in FIG. 14, a depth 91dH of the depressed portion 91d is larger than a depth 104H of the circumferential groove 104 of the shift fork shaft 100. Note however that these dimensions are merely illustrative, and there is no particular limitation thereto.

As shown in FIG. 12 and FIG. 13, the base plate portion 92 includes a depressed portion 160 that is depressed in the axial direction of the boss portion 91. As shown in FIG. 12, the depressed portion 160 is located outward in the radial direction of the boss portion 91 relative to the oil hole 97. The depressed portion 160 extends from the oil hole 97 toward the slidable portion 95. The depressed portion 160 extends from the oil hole 97 toward the slide ring 50.

The depressed portion 160 includes a first depressed portion 161 that is located outward in the radial direction of the boss portion 91 relative to the oil hole 97, and a second depressed portion 162 that extends from the first depressed portion 161 toward the slidable portion 95. The first depressed portion 161 is formed in a hemispherical shape. The second depressed portion 162 extends straight in the radial direction of the boss portion 91. The second depressed portion 162 extends along a straight line (not shown) that connects between a center 91c of the boss portion 91 and a center 50c of the slide ring 50. While there is no particular limitation to the cross-sectional shape of the second depressed portion 162, the contour of the second depressed portion 162 (specifically, the contour as seen on a cross section perpendicular to a straight line that connects together the center 91c of the boss portion 91 and the center 50c of the slide ring 50) is formed in an arc shape in the present embodiment.

As shown in FIG. 13, the first depressed portion 161 is deeper than the second depressed portion 162. A depth 161H of the first depressed portion 161 is deeper than a depth 162H of the second depressed portion 162. 161H>162H. The depth 161H of the first depressed portion 161 is the maximum depth of the depressed portion 160. The maximum depth 161H of the depressed portion 160 is three times or more of the radius of the oil hole 97 of the boss portion 91. In other words, the maximum depth 161H of the depressed portion 160 is 1.5 times or more of the diameter 97D of the oil hole 97 (see FIG. 12). 161H≥1.5×97D.

As shown in FIG. 12, a dimension 161L of the first depressed portion 161 in the radial direction of the boss portion 91 is larger than a dimension 162L of the second depressed portion 162 in the radial direction of the boss portion 91. 161L>162L. The dimension 161L of the first depressed portion 161 in the radial direction of the boss portion 91 is twice or more of the diameter 97D of the oil hole 97 of the boss portion 91. 161L2:2×97D. In the present embodiment, the dimension obtained by adding together the dimension 161L of the first depressed portion 161 and the dimension 162L of the second depressed portion 162 is equivalent to the dimension of the depressed portion 160 in the radial direction of the boss portion 91. The dimension 161L+162L of the depressed portion 160 in the radial direction of the boss portion 91 is smaller than a half of a dimension 93L from a center 97c of the oil hole 97 of the boss portion 91 to a distal end 93t of the first arm portion 93. 161L+162L<0.5×93L.

A maximum dimension 160A of the depressed portion 160 in a direction that is perpendicular to the radial direction and the axial direction of the boss portion 91 is twice or more of the diameter 97D of the oil hole 97 of the boss portion 91. 160A≥2×97D. A minimum dimension 160B of the depressed portion 160 in a direction that is perpendicular to the radial direction and the axial direction of the boss portion 91 is larger than the diameter 97D of the oil hole 97. 160B>97D.

As shown in FIG. 14, the slidable portion 95 of the shift fork 90 is formed in a plate shape. The slidable portion 95 includes a plate-shaped engagement plate portion 95P that extends from the base plate portion 92 toward the slide ring 50. The engagement plate portion 95P is in engagement with the groove 59 of the slide ring 50. As shown in FIG. 12, the engagement plate portion 95P includes another depressed portion 163 that is depressed in the axial direction of the boss portion 91. The depressed portion 163 extends from the depressed portion 160 outward in the radial direction of the boss portion 91. The depressed portion 163 extends from the depressed portion 160 toward the slide ring 50. The second depressed portion 162 and the depressed portion 163 extend straight along the same straight line. Note however that there is no particular limitation thereto.

In addition to the engagement plate portion 95P, a distal end portion 93P of the first arm portion 93 and a distal end portion 94P of the second arm portion 94 are also in engagement with the groove 59 of the slide ring 50. The distal end portion 93P of the first arm portion 93 and the distal end portion 94P of the second arm portion 94 are other slidable portions that engage with the slide ring 50.

The configuration of the transmission 40 is as described above. Next, an example of the operation of the transmission 40 will be described. Herein, a gear-shifting operation from the second speed to the third speed will be described.

While in the second speed, the dogs 88 of the second-speed driven gear 82 are in engagement with the engagement holes 58 of the left slide ring 50 of FIG. 3 and FIG. 4. First, the clutch 30 is disconnected and the shift shaft 131 is operated so that the rotating mechanism 130 rotates the shift drum 120.

This rotation applies a rightward force to the left shift fork 90 of FIG. 8, and the left shift fork 90 moves rightward. In this process, when the shift fork shaft 100 is unable to move rightward, the left shift fork 90 does not start moving until a sufficiently large force is applied to the left shift fork 90. Then, after a sufficiently large force is applied to the left shift fork 90, the left shift fork 90 starts moving fast rightward on the shift fork shaft 100. Therefore, the gear-shifting operation is not smooth, and the gear-shifting feel is not desirable.

With the transmission 40 according to the present embodiment, however, the shift fork shaft 100 can move leftward and rightward. The left shift fork 90 can start moving rightward together with the shift fork shaft 100 even if the force applied to the left shift fork 90 is not sufficiently large. The left shift fork 90 can move rightward relative to the shift fork shaft 100 after moving rightward together with the shift fork shaft 100. The left shift fork 90 can move together with the shift fork shaft 100 when the left shift fork 90 starts moving, and can move over the shift fork shaft 100 after the left shift fork 90 has started moving fast. Therefore, the left shift fork 90 can move smoothly together with the rotation of the shift drum 120, thus realizing a smooth gear-shifting operation. It is possible to realize a desirable gear-shifting feel.

As the left shift fork 90 moves rightward, the left shift fork 90 moves the left slide ring 50 rightward. Thus, the dogs 88 of the second-speed driven gear 82 come off the engagement holes 58 of the left slide ring 50. The engagement between the second-speed driven gear 82 and the left slide ring 50 is disengaged.

The shift fork shaft 100 receives a leftward force from a second spring 102. Therefore, the shift fork shaft 100 moves rightward from the neutral position together with the left shift fork 90, and then returns to the neutral position by receiving a biasing force from the second spring 102.

As the shift drum 120 further rotates, a leftward force is applied to the right shift fork 90 of FIG. 8, and the right shift fork 90 moves leftward. The shift fork shaft 100 is in the neutral position, and can move leftward and rightward. The right shift fork 90 can start moving leftward together with the shift fork shaft 100, and then can move leftward relative to the shift fork shaft 100. The right shift fork 90 can move leftward together with the shift fork shaft 100 when the right shift fork 90 starts moving, and then can move leftward relative to the shift fork shaft 100. Therefore, the right shift fork 90 can move smoothly together with the rotation of the shift drum 120, thus realizing a smooth gear-shifting operation. It is possible to realize a desirable gear-shifting feel. As the right shift fork 90 moves leftward, the right shift fork 90 moves the right slide ring 50 of FIG. 3 and FIG. 4 leftward. Thus, the dogs 88 of the third-speed driven gear 83 slide into the engagement holes 58 of the right slide ring 50. The third-speed driven gear 83 and the right slide ring 50 engage with each other.

Then, the clutch 30 is connected. Thus, power is transmitted from the drive shaft 41 to the driven shaft 42 via the third-speed transmission gear pair 63. A gear-shifting operation from the second speed to the third speed has been described above. Although the description will be omitted, other gear-shifting operations are performed similarly.

Note that while there is no particular limitation to the amount by which the shift fork shaft 100 can move leftward and rightward from the neutral position, it may be such that the shift fork shaft 100 can move until engaging dogs 88 come completely off the engagement holes 58 or it may be such that the shift fork shaft 100 can move until non-engaging dogs 88 are completely inserted into the engagement holes 58. For example, where the shift fork shaft 100 is in the neutral position, designation 101L denotes the interval between the first end portion 101 of the shift fork shaft 100 and the first far-end wall portion 141a of the first hole portion 141 (see FIG. 10), and designation 102L denotes the interval between the second end portion 102 and the second far-end wall portion 142a of the second hole portion 142 (see FIG. 11). Designation 88L denotes the length of protrusion of the dogs 88 (see FIG. 4). Then, the interval 101L between the first end portion 101 of the shift fork shaft 100 and the first far-end wall portion 141a may be larger than the length of protrusion 88L of the dogs 88, and the interval 102L between the second end portion 102 of the shift fork shaft 100 and the second far-end wall portion 142a may be larger than the length of protrusion 88L of the dogs 88. This further improves the gear-shifting feel during a gear-shifting operation.

As described above, the transmission 40 according to the present embodiment, oil can be supplied directly to the slidable portion of each shift fork 90 that slides on the slide ring 50 through the shift fork shaft 100 and the shift fork 90. Next, how oil is supplied will be described.

As shown in FIG. 8, oil is supplied to the first hole portion 141 of the transmission case 38 from the oil pump 69. Oil is supplied from the first hole portion 141 to the oil supply path 103 inside the shift fork shaft 100. As shown in FIG. 14, oil in the oil supply path 103 of the shift fork shaft 100 flows into the circumferential groove 104 through the oil supply hole 103a and the oil supply hole 103b.

The circumferential groove 104 of the shift fork shaft 100 overlaps with the depressed portion 91d of the boss portion 91 of the shift fork 90. The depressed portion 91d is connected to the oil hole 97 of the boss portion 91. Therefore, oil in the circumferential groove 104 flows into the oil hole 97 through the depressed portion 91d.

The depressed portion 160 extending from the oil hole 97 to the slidable portion 95 is provided adjacent to the oil hole 97 of the shift fork 90. Oil having passed through the oil hole 97 is guided to the slidable portion 95 by the depressed portion 160. That is, oil having passed through the oil hole 97 flows into the depressed portion 160, and reaches the slidable portion 95 through the depressed portion 160.

The slidable portion 95 includes the depressed portion 163. Oil supplied to the slidable portion 95 is guided to a deep end portion of the groove 59 on the outer circumferential surface of the slide ring 50 through the depressed portion 163. Oil supplied to the slidable portion 95 diffuses across the entire groove 59 on the outer circumferential surface of the slide ring 50 as the slide ring 50 rotates. Thus, oil is supplied to the distal end portion 93P of the first arm portion 93 and the distal end portion 94P of the second arm portion 94 (see FIG. 12). That is, oil is supplied also to other slidable portions of the shift fork 90.

In the present embodiment, as shown in FIG. 14, the oil supply holes 103a and 103b of the shift fork shaft 100 and the oil hole 97 of the shift fork 90 are shifted from each other in the axial direction. The oil supply holes 103a and 103b and the circumferential groove 104 of the shift fork shaft 100 serve to guide oil radially outward from the oil supply path 103 of the shift fork shaft 100. The depressed portion 91d of the boss portion 91 of the shift fork 90 serves to guide oil in the axial direction.

As described above, oil is supplied directly to the slidable portion of the shift fork 90, thereby lubricating the shift fork 90 and the slide ring 50 with oil.

As described above, with the transmission 40 according to the present embodiment, the shift fork shaft 100 includes the oil supply path 103, the oil supply hole 103a and the oil supply hole 103b. The shift fork 90 includes the oil hole 97 that communicates with the oil supply path 103. Thus, oil can be supplied directly to the slidable portion 95 of the shift fork 90 from the oil supply path 103 of the shift fork shaft 100.

Herein, the oil hole 97 of the shift fork 90 is formed in the boss portion 91, which has a larger dimension in the axial direction than the base plate portion 92 (see FIG. 13).

Therefore, it is possible to provide a sufficiently large oil hole 97 without increasing the thickness of the base plate portion 92. A sufficient amount of oil can be supplied toward the slidable portion 95 of the shift fork 90 from the oil supply path 103 of the shift fork shaft 100 without increasing the thickness of the shift fork 90.

With the transmission 40 according to the present embodiment, the base plate portion 92 includes the depressed portion 160 that is depressed in the axial direction of the boss portion 91. Oil from the oil hole 97 is guided to the slidable portion 95 through the depressed portion 160. Even though the oil hole 97 is short, since the depressed portion 160 serves as a guide, oil coming from the oil hole 97 is desirably guided to the slidable portion 95 without being scattered. Therefore, a sufficient amount of oil can be supplied directly and smoothly to the slidable portion 95 without forming a narrow hole that communicates with the slidable portion 95 in the base plate portion 92. Thus, with the transmission 40 according to the present embodiment, oil can be supplied directly to the slidable portion 95 of the shift fork 90, and it is possible to reduce the thickness of the shift fork 90.

With the transmission 40 according to the present embodiment, there is no need to machine a narrow hole extending in the radial direction of the boss portion 91 in the base plate portion 92. Machining the depressed portion 160, as opposed to machining a narrow hole, does not require a high machining precision. Moreover, the machining takes a shorter amount of time. Thus, it is possible to reduce the machining cost.

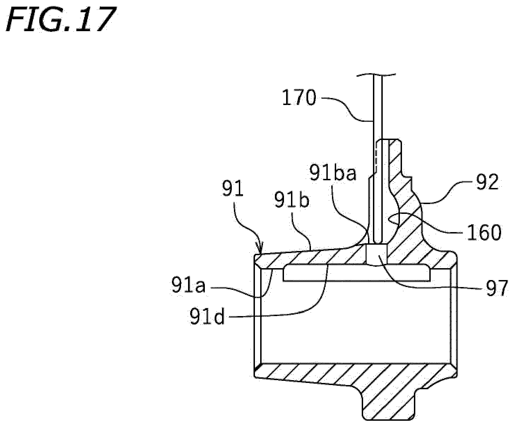

With the transmission 40 according to the present embodiment, it is possible to easily machine the oil hole 97 from radially outside of the boss portion 91 by holding a cutting tool 170 such as a drill along the depressed portion 160 of the base plate portion 92, as shown in FIG. 17. That is, the cutting tool 170 such as a drill can easily be held against the boss portion 91 from radially outside. Therefore, the oil hole 97 can easily be formed in the boss portion 91 by using a general-purpose tool such as an angle head (not shown).

According to the present embodiment, as shown in FIG. 13, the depressed portion 160 of the shift fork 90 includes the first depressed portion 161 and the second depressed portion 162. The first depressed portion 161 is formed at a position closer to the boss portion 91 than the second depressed portion 162. The first depressed portion 161 close to the boss portion 91 is deeper, thus making it easier to machine the oil hole 97 in the boss portion 91. Moreover, oil from the oil hole 97 can be temporarily stored in the first depressed portion 161, and oil stored in the first depressed portion 161 can be desirably supplied to the slidable portion 95 through the second depressed portion 162.

While there is no particular limitation to the shape of the second depressed portion 162, the second depressed portion 162 extends straight in the radial direction of the boss portion 91, as shown in FIG. 12, in the present embodiment. Thus, oil stored in the first depressed portion 161 is supplied smoothly toward the slidable portion 95.

While there is no particular limitation to the shape of the first depressed portion 161, the first depressed portion 161 is formed in a hemispherical shape in the present embodiment. According to the present embodiment, as compared with a case where the first depressed portion 161 is formed in a narrow groove shape, it is easier to machine the oil hole 97 in the boss portion 91 (see FIG. 17). Oil from the oil hole 97 can be desirably stored in the first depressed portion 161, and oil can be desirably supplied to the slidable portion 95 through the second depressed portion 162.

According to the present embodiment, the portion 91ba of the outer circumferential surface 91b of the boss portion 91 where the oil hole 97 is formed is a surface that is perpendicular to the radial direction of the boss portion 91. Therefore, when machining the oil hole 97 in the boss portion 91, the cutting tool 170 can be held perpendicular against the outer circumferential surface 91b of the boss portion 91. Thus, it is easy to machine the oil hole 97 in the boss portion 91.

In FIG. 14, designation 92S denotes the surface position of the base plate portion 92. Designation 97S denotes the position of the end portion of the oil hole 97. According to the present embodiment, the depressed portion 160 is depressed not only from the surface position 92S of the base plate portion 92 but also from the position 97S of the end portion of the oil hole 97. Therefore, it is possible to desirably machine the oil hole 97 up to the end portion thereof, making it easy to machine the oil hole 97 in the boss portion 91.

While there is no particular limitation to the dimension of the first depressed portion 161, the first depressed portion 161 is relatively large in the present embodiment. In the present embodiment, the dimension 161L of the first depressed portion 161 in the radial direction of the boss portion 91 is twice or more of the diameter 97D of the oil hole 97. According to the present embodiment, since the first depressed portion 161 is relatively large, it is easy to machine the oil hole 97 in the boss portion 91. Oil from the oil hole 97 can be desirably stored in the first depressed portion 161, and oil can be desirably supplied to the slidable portion 95 through the second depressed portion 162.

In the present embodiment, as shown in FIG. 13, the maximum depth 161H of the depressed portion 160 is three times or more of the radius of the oil hole 97 of the boss portion 91. Since the depressed portion 160 is relatively large, it is easy to machine the oil hole 97 in the boss portion 91. A sufficient amount of oil can be supplied to the slidable portion 95 from the oil hole 97 through the depressed portion 160.

In the present embodiment, as shown in FIG. 12, the maximum dimension 160A of the depressed portion 160 in a direction that is perpendicular to the radial direction of the boss portion 91 and the axial direction of the boss portion 91 is twice or more of the diameter 97D of the oil hole 97 of the boss portion 91. Since the depressed portion 160 is relatively large, it is easy to machine the oil hole 97 in the boss portion 91. A sufficient amount of oil can be supplied to the slidable portion 95 from the oil hole 97 through the depressed portion 160.

In the present embodiment, as shown in FIG. 12, the minimum dimension 160B of the depressed portion 160 in a direction that is perpendicular to the radial direction of the boss portion 91 and the axial direction of the boss portion 91 is larger than the diameter 97D of the oil hole 97 of the boss portion 91. Since the depressed portion 160 is relatively large, it is easy to machine the oil hole 97 in the boss portion 91. A sufficient amount of oil can be supplied to the slidable portion 95 from the oil hole 97 through the depressed portion 160.

In the present embodiment, as shown in FIG. 12, the dimension 161L+162L of the depressed portion 160 in the radial direction of the boss portion 91 is smaller than a half of the dimension 93L from the center 97c of the oil hole 97 of the boss portion 91 to the distal end 93t of the first arm portion 93. The depressed portion 160 is relatively short. Since the length from the oil hole 97 to the slidable portion 95 is relatively short, oil can be desirably supplied to the slidable portion 95 from the oil hole 97.

In the present embodiment, the slidable portion 95 of the shift fork 90 includes the plate-shaped engagement plate portion 95P. The distal end portion 93P of the first arm portion 93 of the shift fork 90, the distal end portion 94P of the second arm portion 94 and the engagement plate portion 95P are in slidable engagement with the groove 59 formed on the outer circumferential surface of the slide ring 50. In addition to the distal end portion 93P of the first arm portion 93 and the distal end portion 94P of the second arm portion 94, the engagement plate portion 95P is also in engagement with the slide ring 50. Therefore, the shift fork 90 can stably support the slide ring 50. In a gear-shifting operation, the shift fork 90 can stably move the slide ring 50, thereby realizing a desirable gear-shifting operation. The engagement plate portion 95P includes another depressed portion 163 extending toward the slide ring 50. Oil from the oil hole 97 of the boss portion 91 flows through the depressed portion 160 of the base plate portion 92 and the depressed portion 163 of the engagement plate portion 95P in this order to be guided to the groove 59 of the slide ring 50. Therefore, oil can be desirably guided to the groove 59 of the slide ring 50.

According to the present embodiment, the movable members that detachably engage with the driven gears 81 to 86 are slide rings 50, and the slide rings 50 are not in mesh with the drive gears 71 to 76 attached to the drive shaft 41. According to the present embodiment, the slide rings 50 do not need teeth for meshing with the drive gears 71 to 76. Therefore, as compared with a case where the movable members are gears that mesh with the drive gears 71 to 76, it is possible to reduce the thickness of the movable members. Thus, it is possible to reduce the thickness of the movable members and the shift forks 90. Therefore, it is possible to reduce the size of the transmission 40.

In the present embodiment, the engagement protruding portions are the dogs 88 provided on the driven gears 81 to 86, and the engagement depressed portions are the engagement holes 58, which are through holes formed in the slide rings 50. Note however that the engagement depressed portions do not always need to be through holes. The engagement depressed portions may be bottomed holes. According to the present embodiment, however, the engagement depressed portions are through holes, and it is possible to reduce the thickness of the slide rings 50. Thus, it is possible to reduce the thickness of the slide rings 50 and the shift forks 90. Therefore, it is possible to reduce the size of the transmission 40.

One embodiment has been described above. Note however that the embodiment described above is merely an example, and various other embodiments are possible.

In the embodiment described above, all of the dogs 88 are provided on the driven gears 81 to 86, and all of the slide rings 50 are supported on the driven shaft 42. However, all of the dogs 88 may be provided on the drive gears 71 to 76, and all of the slide rings 50 may be supported on the drive shaft 41. In such a case, the driven shaft 42 corresponds to the "first rotating shaft", the drive shaft 41 to the "second rotating shaft", the driven gears 81 to 86 to the "first gear", and the drive gears 71 to 76 to the "second gear".

The dogs 88 may be provided on at least one of the drive gears 71 to 76 and on at least one of the driven gears 81 to 86, and at least one slide ring 50 may be supported on each of the drive shaft 41 and the driven shaft 42. That is, a plurality of slide rings 50 may be distributed between the drive shaft 41 and the driven shaft 42.

The slide ring 50 does not always need to include the groove 59. For example, the shift fork 90 may be configured to push the side surface of the slide ring 50 in the axial direction.

In the embodiment described above, the shift fork 90 is configured to move the slide ring 50 in the axial direction. The "movable member" that is moved by the shift fork 90 is the slide ring 50. However, the "movable member" is not limited to the slide ring 50. The slide ring 50 may be absent. For example, at least one of the driven gears 81 to 86 may be movable in the axial direction (hereinafter, a gear that can move in the axial direction will be referred to as a moving gear), and the moving gear may include engagement depressed portions that engage with the dogs 88. Alternatively, the dogs 88 may be provided on at least one of the drive gears 71 to 76, and a drive gear that is adjacent to the drive gear with the dogs 88 provided thereon may be a moving gear, wherein the moving gear includes the engagement depressed portions that engage with the dogs 88. In such a case, the shift fork 90 is configured to move the moving gear in the axial direction. The moving gear corresponds to the "movable member".

In the embodiment described above, the dogs 88 corresponding to the "engagement protruding portion" are provided on the driven gears 81 to 86 corresponding to the "second gear". The engagement holes 58 corresponding to the "engagement depressed portion" are formed in the slide rings 50 corresponding to the "movable member". Note however that there is no limitation thereto. For example, the dogs 88 may be provided on the slide rings 50, and the engagement holes 58 may be formed in the driven gears 81 to 86. Thus, the engagement protruding portion may be provided on the movable member, and the engagement depressed portion may be formed in the second gear.

In the embodiment described above, the depressed portion 160 of the shift fork 90 includes the first depressed portion 161 shaped in a hemispherical shape, and the second depressed portion 162 shaped as a groove extending straight. However, there is no particular limitation to the shape as long as the depressed portion 160 guides oil from the oil hole 97 to the slidable portion 95. For example, the first depressed portion 161 does not always need to be in a hemispherical shape. The second depressed portion 162 does not always need to extend straight. The depressed portion 160 does not always need to include the first depressed portion 161 and the second depressed portion 162. The dimensions of the depressed portion 160 described above are illustrative, and there is no particular limitation thereto.

The vehicle is not limited to the motorcycle 1. The vehicle may be a straddled vehicle other than a motorcycle. Note that a straddled vehicle refers to a vehicle that is straddled by a passenger. The vehicle is not limited to a straddled vehicle, but may be a vehicle of any other form. The vehicle may be an auto tricycle, an auto quadricycle, an ATV (All Terrain Vehicle), or a snowmobile, for example.

### REFERENCE SIGNS LIST

1: Motorcycle (vehicle), 3: Rear wheel (driving wheel), 7: Chain (power transmitting member), 10: Internal combustion engine (drive source), 40: Transmission, 41: Drive shaft (first rotating shaft), 42: Driven shaft (second rotating shaft), 50: Slide ring (movable member), 58: Engagement hole (engagement depressed portion), 59: Groove, 71 to 76: Drive gear (first gear), 81 to 86: Driven gear (second gear), 88: Dog (engagement protruding portion), 90: Shift fork, 91: Boss portion, 92: Base plate portion, 93: First arm portion, 94: Second arm portion, 95: Slidable portion, 95P: Engagement plate portion, 97: Oil hole, 100: Shift fork shaft, 103: Oil supply path, 160: Depressed portion, 161: First depressed portion, 162: Second depressed portion, 163: Another depressed portion

## Claims

1. A transmission (40) comprising:
a first rotating shaft (41);
a second rotating shaft (42) arranged parallel to the first rotating shaft (41);
a first gear (71-76) attached to the first rotating shaft (41) so as to be unrotatable relative to the first rotating shaft (41);
a second gear (81-86) that is attached to the second rotating shaft (42) so as to be rotatable relative to the second rotating shaft (42) and axially unmovable relative to the second rotating shaft (42) in axial direction of the second rotating shaft (42) and is in mesh with the first gear (71-76);
a movable member (50) that is attached to the second rotating shaft (42) so as to be unrotatable relative to the second rotating shaft (42) and axially movable relative to the second rotating shaft (42) in axial direction of the second rotating shaft (42) and is adjacent to the second gear (81) in axial direction of the second rotating shaft (42);
a shift fork shaft (100) arranged parallel to the first rotating shaft (41) and the second rotating shaft (42); and
a shift fork (90) that is attached to the shift fork shaft (100) so as to be axially movable relative to the shift fork shaft (100) in axial direction of the shift fork shaft (100) and
configured to move the movable member (50) in axial direction of the second rotating shaft (42), wherein:
one of the second gear (81-86) and the movable member (50) includes an engagement protruding portion (88) that protrudes in axial direction of the second rotating shaft (42);
the other one of the second gear (81-86) and the movable member (50) includes an engagement depressed portion (58) that is configured to detachably engage with the engagement protruding portion (88);
the shift fork (90) includes a cylindrical boss portion (91) through which the shift fork shaft (100) is inserted, a base plate portion (92) extending from the boss portion (91) toward the movable member (50), a first arm portion (93) extending from the base plate portion (92) toward a side of the movable member (50), a second arm portion (94) extending from the base plate portion (92) toward a side of the movable member (50) and located on an opposite side from the first arm portion (93) with respect to the movable member (50), and a slidable portion (95) between the first arm portion (93) and the second arm portion (94) of the base plate portion (92), wherein the slidable portion (95) is configured to slide on the movable member (50);
a dimension (91L) of the boss portion (91) in axial direction of the second rotating shaft (42) is larger than a dimension (92L) of the base plate portion (92) in axial direction of the second rotating shaft (42);
an oil supply path (103) configured for oil to pass there through is formed inside the shift fork shaft (100); and
the shift fork (90) includes:
an oil hole (97) extending in a radial direction of the boss portion (91) through the boss portion (91) so as to communicate with the oil supply path (103),
**characterized in that** the shift fork (90) further includes:
a depressed portion (160) formed in the base plate portion (92), wherein the depressed portion (160) is located outward in the radial direction of the boss portion (91) relative to the oil hole (97) and extends from the oil hole (97) toward the slidable portion (95), and the depressed portion (160) is depressed in axial direction of the boss portion (91).

2. The transmission (40) according to claim 1, **characterized in that** the depressed portion (160) includes a first depressed portion (161) located outward in the radial direction of the boss portion (91) relative to the oil hole (97), and a second depressed portion (162) extending from the first depressed portion (161) toward the slidable portion (95); and
a depth (161H) of the first depressed portion (161) is larger than a depth (162H) of the second depressed portion (162).

3. The transmission (40) according to claim 2, **characterized in that** the second depressed portion (162) extends straight in radial direction of the boss portion (91).

4. The transmission (40) according to claim 2 or 3, **characterized in that** the first depressed portion (161) is formed in a hemispherical shape.

5. The transmission (40) according to any one of claims 2 to 4, **characterized in that** a dimension (161L) of the first depressed portion (161) in radial direction of the boss portion (91) is twice or more of a diameter (97D) of the oil hole (97).

6. The transmission (40) according to any one of claims 1 to 5, **characterized in that**
the boss portion (91) includes an inner circumferential surface (91a) and an outer circumferential surface (91b); and
a portion (91ba) of the outer circumferential surface (91b) where the oil hole (97) is formed is a surface that is perpendicular to the radial direction of the boss portion (91).

7. The transmission (40) according to any one of claims 1 to 6, **characterized in that** a maximum depth (161H) of the depressed portion (160) is three times or more of a radius of the oil hole (97).

8. The transmission (40) according to any one of claims 1 to 7, **characterized in that** a maximum dimension (160A) of the depressed portion (160) in a direction that is perpendicular to the radial direction of the boss portion (91) and the axial direction of the boss portion (91) is twice or more of a diameter (97D) of the oil hole (97).

9. The transmission (40) according to any one of claims 1 to 8, **characterized in that** a minimum dimension (160B) of the depressed portion (160) in a direction that is perpendicular to the radial direction of the boss portion (91) and the axial direction of the boss portion (91) is larger than a diameter (97D) of the oil hole (97).

10. The transmission (40) according to any one of claims 1 to 9, **characterized in that** a dimension (161L+162L) of the depressed portion (160) in the radial direction of the boss portion (91) is smaller than a half of a dimension (93L) from a center (97c) of the oil hole (97) to a distal end (93t) of the first arm portion (93).

11. The transmission (40) according to any one of claims 1 to 10, **characterized in that**
the movable member (50) includes an outer circumferential surface including a groove (59) formed thereon that is depressed radially inward in radial direction of the second rotating shaft (42);
the slidable portion (95) includes a plate-shaped engagement plate portion (95P) extending from the base plate portion (92) toward the movable member (50);
a distal end portion (93P) of the first arm portion (93), a distal end portion (94P) of the second arm portion (94) and the engagement plate portion (95P) are in slidable engagement with the groove (59) of the movable member (50); and
the engagement plate portion (95P) includes another depressed portion (163) that is depressed in the axial direction of the boss portion (91) and extends from the depressed portion (160) toward the movable member (50).

12. The transmission (40) according to claim 11, **characterized in that** the movable member (50) is an annular member arranged concentric with the second rotating shaft (42); and
the annular member is arranged to be not in mesh with the first gear (71-76) attached to the first rotating shaft (41).

13. The transmission (40) according to claim 12, **characterized in that** the engagement protruding portion (88) is formed on the second gear (81-86); and
the engagement depressed portion (58) is a through hole formed in the annular member.

14. A vehicle (1) comprising:
the transmission (40) according to any one of claims 1 to 13;
a drive source (10) that is linked to the first rotating shaft (41) and configured to drive the first rotating shaft (41);
a power transmitting member (7) that is linked to the second rotating shaft (42); and
a driving wheel (3) that is linked to the power transmitting member (7).

15. A motorcycle (1) comprising:
the transmission (40) according to any one of claims 1 to 13;
a front wheel (2), a rear wheel (3) as a driven wheel, an internal combustion engine (10) as a drive source, and a chain (7) or a belt or a shaft as a power transmitting member that is linked to the second rotating shaft (42), wherein the rear wheel (3) is linked to the power transmitting member (7).

## Patentansprüche

1. Ein Getriebe (40), das umfasst:
eine erste Dreh-Welle (41);
eine zweite Dreh-Welle (42), die parallel zur ersten Dreh-Welle (41) angeordnet ist;
ein erstes Zahnrad (71-76), das an der ersten Dreh-Welle (41) befestigt ist, so dass es relativ zur ersten Dreh-Welle (41) nicht drehbar ist;
ein zweites Zahnrad (81-86), das an der zweiten Dreh-Welle (42) angebracht ist, so dass es relativ zu der zweiten Dreh-Welle (42) drehbar und relativ zu der zweiten Dreh-Welle (42) in axialer Richtung der zweiten Dreh-Welle (42) axial un-bewegbar ist und mit dem ersten Zahnrad (71-76) in Eingriff steht;
ein bewegbares Element (50), das an der zweiten Dreh-Welle (42) angebracht ist, so dass es relativ zur zweiten Dreh-Welle (42) nicht drehbar ist und relativ zur zweiten Dreh-Welle (42) in axialer Richtung der zweiten Dreh-Welle (42) axial bewegbar ist und in axialer Richtung der zweiten Dreh-Welle (42) benachbart zu dem zweiten Zahnrad (81) ist;
eine Schalt-Gabel-Welle (100), die parallel zu der ersten Dreh-Welle (41) und der zweiten Dreh-Welle (42) angeordnet ist; und
eine Schalt-Gabel (90), die an der Schalt-Gabel-Welle (100) angebracht ist, so dass sie relativ zu der Schalt-Gabel-Welle (100) in axialer Richtung der Schalt-Gabel-Welle (100) axial bewegbar ist, und die konfiguriert ist, so dass sie das bewegbare Element (50) in axialer Richtung der zweiten Dreh-Welle (42) bewegt, wobei:
eines von dem zweiten Zahnrad (81-86) und dem bewegbaren Element (50) einen Eingriffs-Vorsprungs-Abschnitt (88) beinhaltet, der in axialer Richtung der zweiten Dreh-Welle (42) vorsteht;
das andere von dem zweiten Zahnrad (81-86) und dem bewegbaren Element (50) einen Eingriffs-Eindrück-Abschnitt (58) beinhaltet, der konfiguriert ist, um lösbar mit dem Eingriffs-Vorsprungs-Abschnitt (88) in Eingriff zu kommen;
die Schalt-Gabel (90) einen zylindrischen Naben-Abschnitt (91), durch den die Schalt-Gabel-Welle (100) eingesetzt ist, einen Grund-Platten-Abschnitt (92), der sich von dem Naben-Abschnitt (91) in Richtung des bewegbaren Elements (50) erstreckt,
einen ersten Armabschnitt (93), der sich von dem Grund-Platten-Abschnitt (92) zu einer Seite des bewegbaren Elements (50) erstreckt, einen zweiten Armabschnitt (94), der sich von dem Grund-Platten-Abschnitt (92) zu einer Seite des bewegbaren Elements (50) erstreckt und auf einer gegenüberliegenden Seite von dem ersten Armabschnitt (93) in Bezug auf das bewegbare Element (50) angeordnet ist, und einen verschiebbaren Abschnitt (95) zwischen dem ersten Armabschnitt (93) und dem zweiten Armabschnitt (94) des Grund-Platten-Abschnitts (92), wobei der verschiebbare Abschnitt (95) konfiguriert ist, um auf dem bewegbaren Element (50) zu gleiten, beinhaltet;
eine Abmessung (91L) des Naben-Abschnitts (91) in axialer Richtung der zweiten Dreh-Welle (42) größer ist als eine Abmessung (92L) des Grund-Platten-Abschnitts (92) in axialer Richtung der zweiten Dreh-Welle (42);
ein ÖI-Zufuhr-Pfad (103), der für den Durchgang von Öl konfiguriert ist, innerhalb der Schalt-Gabel-Welle (100) ausgebildet ist; und
die Schalt-Gabel (90) beinhaltet:
ein Öl-Loch (97), das sich in einer radialen Richtung des Naben-Abschnitts (91) durch den Naben-Abschnitt (91) erstreckt, um mit dem Öl-Zufuhr-Pfad (103) in Verbindung zu stehen, **dadurch gekennzeichnet, dass** die Schalt-Gabel (90) weiterhin beinhaltet:
einen vertieften Abschnitt (160), der in dem Grund-Platten-Abschnitt (92) ausgebildet ist, wobei der vertiefte Abschnitt (160) in der radialen Richtung des Naben-Abschnitts (91) relativ zu dem Öl-Loch (97) nach außen angeordnet ist und sich von dem Öl-Loch (97) in Richtung des verschiebbaren Abschnitts (95)
erstreckt, und der vertiefte Abschnitt (160) in der axialen Richtung des Naben-Abschnitts (91) vertieft ist.

2. Das Getriebe (40) gemäß Anspruch 1, **dadurch gekennzeichnet, dass** der vertiefte Abschnitt (160) einen ersten vertieften Abschnitt (161), der in der radialen Richtung des Naben-Abschnitts (91) relativ zu dem Öl-Loch (97) außen angeordnet ist, und einen zweiten vertieften Abschnitt (162), der sich von dem ersten vertieften Abschnitt (161) in Richtung des verschiebbaren Abschnitts (95) erstreckt, beinhaltet; und eine Tiefe (161H) des ersten vertieften Abschnitts (161) größer ist als eine Tiefe (162H) des zweiten vertieften Abschnitts (162).

3. Das Getriebe (40) gemäß Anspruch 2, **dadurch gekennzeichnet, dass** der zweite vertiefte Abschnitt (162) sich gerade in radialer Richtung des Naben-Abschnitts (91) erstreckt.

4. Das Getriebe (40) gemäß Anspruch 2 oder 3, **dadurch gekennzeichnet, dass** der erste vertiefte Abschnitt (161) in einer halbkugelförmige Form ausgebildet ist.

5. Das Getriebe (40) gemäß irgendeinem der Ansprüche 2 bis 4, **dadurch gekennzeichnet, dass** eine Abmessung (161L) des ersten vertieften Abschnitts (161) in radialer Richtung des Naben-Abschnitts (91) das Doppelte oder mehr eines Durchmessers (97D) des Öl-Lochs (97) ist.

6. Das Getriebe (40) gemäß irgendeinem der Ansprüche 1 bis 5, **dadurch gekennzeichnet, dass** der Naben-Abschnitt (91) eine Innen-Umfangs-Fläche (91a) und eine Außen-Umfangs-Fläche (91b) beinhaltet; und
ein Abschnitt (91ba) der Außen-Umfangs-Fläche (91b), in dem das Öl-Loch (97) ausgebildet ist, eine Fläche ist, die senkrecht zur radialen Richtung des Naben-Abschnitts (91) ist.

7. Das Getriebe (40) gemäß irgendeinem der Ansprüche 1 bis 6, **dadurch gekennzeichnet, dass** eine maximale Tiefe (161H) des vertieften Abschnitts (160) das Dreifache oder mehr des Radius des Öl-Lochs (97) ist.

8. Das Getriebe (40) gemäß irgendeinem der Ansprüche 1 bis 7, **dadurch gekennzeichnet, dass** eine maximale Abmessung (160A) des vertieften Abschnitts (160) in einer Richtung, die senkrecht zur radialen Richtung des Naben-Abschnitts (91) und zur axialen Richtung des Naben-Abschnitts (91) ist, das Doppelte oder mehr eines Durchmessers (97D) des Öl-Lochs (97) ist.

9. Das Getriebe (40) gemäß irgendeinem der Ansprüche 1 bis 8, **dadurch gekennzeichnet, dass** eine minimale Abmessung (160B) des vertieften Abschnitts (160) in einer Richtung, die senkrecht zur radialen Richtung des Naben-Abschnitts (91) und der axialen Richtung des Naben-Abschnitts (91) ist, größer als ein Durchmesser (97D) des Öl-Lochs (97) ist.

10. Das Getriebe (40) gemäß irgendeinem der Ansprüche 1 bis 9, **dadurch gekennzeichnet, dass** eine Abmessung (161L+162L) des vertieften Abschnitts (160) in radialer Richtung des Naben-Abschnitts (91) kleiner ist als die Hälfte einer Abmessung (93L) von einer Mitte (97c) des Öl-Lochs (97) zu einem distalen Ende (93t) des ersten Armabschnitts (93).

11. Das Getriebe (40) gemäß irgendeinem der Ansprüche 1 bis 10, **dadurch gekennzeichnet, dass** das bewegbare Element (50) eine Außen-Umfangs-Fläche beinhaltet, die Nut (59) beinhaltet, die darauf ausgebildet ist, die in radialer Richtung der zweiten Dreh-Welle (42) radial nach innen eingedrückt ist;
der verschiebbare Abschnitt (95) einen plattenförmigen Eingriffs-Platten-Abschnitt (95P) beinhaltet, der sich von dem Grund-Platten-Abschnitt (92) zu dem bewegbaren Element (50) erstreckt;
ein distaler Endabschnitt (93P) des ersten Armabschnitts (93), ein distaler Endabschnitt (94P) des zweiten Armabschnitts (94) und der Eingriffs-Platten-Abschnitt (95P) in gleitendem Eingriff mit der Nut (59) des bewegbaren Elements (50) sind; und
der Eingriffs-Platten-Abschnitt (95P) einen weiteren vertieften Abschnitt (163) beinhaltet, der in der axialen Richtung des Naben-Abschnitts (91) vertieft ist und sich von dem vertieften Abschnitt (160) in Richtung des bewegbaren Elements (50) erstreckt.

12. Das Getriebe (40) gemäß Anspruch 11, **dadurch gekennzeichnet, dass** das bewegbare Element (50) ein ringförmiges Element ist, das konzentrisch zu der zweiten Dreh-Welle (42) angeordnet ist; und
das ringförmige Element angeordnet ist, um nicht mit dem ersten Zahnrad (71-76), das an der ersten Dreh-Welle (41) befestigt ist, in Eingriff zu stehen.

13. Das Getriebe (40) gemäß Anspruch 12, **dadurch gekennzeichnet, dass** der Eingriffs-Vorsprungs-Abschnitt (88) an dem zweiten Zahnrad (81-86) ausgebildet ist; und
der Eingriffs-Eindrück-Abschnitt (58) ein Durchgangs-Loch ist, das in dem ringförmigen Element ausgebildet ist.

14. Ein Fahrzeug (1), das umfasst:
das Getriebe (40) gemäß irgendeinem der Ansprüche 1 bis 13;
eine Antriebsquelle (10), die mit der ersten Dreh-Welle (41) verbunden und
konfiguriert ist, um die erste Dreh-Welle (41) anzutreiben;
ein Kraft-Übertragungs-Element (7), das mit der zweiten Dreh-Welle (42) verbunden ist; und
ein Antriebs-Rad (3), das mit dem Kraft-Übertragungs-Element (7) verbunden ist.

15. Ein Motorrad (1), das umfasst:
das Getriebe (40) gemäß irgendeinem der Ansprüche 1 bis 13;
ein Vorder-Rad (2), ein Hinter-Rad (3) als angetriebenes Rad, einen VerbrennungsMotor (10) als Antriebsquelle und eine Kette (7) oder einen Riemen oder eine Welle als Kraft-Übertragungs-Element, das mit der zweiten Dreh-Welle (42) verbunden ist, wobei das Hinter-Rad (3) mit dem Kraft-Übertragungs-Element (7) verbunden ist.

## Revendications

1. Transmission (40) comprenant :
un premier axe rotatif (41) ;
un deuxième axe rotatif (42) agencé parallèlement au premier axe rotatif (41) ;
un premier engrenage (71-76) attaché au premier axe rotatif (41) de manière à ne pas pouvoir tourner par rapport au premier axe rotatif (41) ;
un deuxième engrenage (81-86) qui est attaché au deuxième axe rotatif (42) de manière à pouvoir tourner par rapport au deuxième axe rotatif (42) et qui est immobilisé axialement par rapport au deuxième axe rotatif (42) en direction axiale du deuxième axe rotatif (42) et engrené avec le premier engrenage (71-76) ;
un élément mobile (50) qui est attaché au deuxième axe rotatif (42) de manière à ne pas pouvoir tourner par rapport au deuxième axe rotatif (42) et qui est mobile axialement par rapport au deuxième axe rotatif (42) en direction axiale du deuxième axe rotatif (42) et adjacent au deuxième engrenage (81) en direction axiale du deuxième axe rotatif (42) ;
un axe de fourchette de changement de rapport (100) agencé parallèlement au premier axe rotatif (41) et au deuxième axe rotatif (42) ; et
une fourchette de changement de rapport (90) qui est attachée à l'axe de fourchette de changement de rapport (100) de manière à être mobile axialement par rapport à l'axe de fourchette de changement de rapport (100) en direction axiale de l'axe de fourchette de changement de rapport (100) et configurée pour déplacer l'élément mobile (50) en direction axiale du deuxième axe rotatif (42), dans laquelle :
un élément parmi le deuxième engrenage (81-86) et l'élément mobile (50) comporte une portion saillante d'engagement (88) qui fait saillie en direction axiale du deuxième axe rotatif (42) ;
l'autre élément parmi le deuxième engrenage (81-86) et l'élément mobile (50) comprend une portion renfoncée d'engagement (58) qui est configurée pour s'engager de manière amovible avec la portion saillante d'engagement (88) ;
la fourchette de changement de rapport (90) comprend une portion de bossage cylindrique (91) à travers laquelle est inséré l'axe de la fourchette de changement de rapport (100), une portion de plaque de base (92) qui s'étend depuis la portion de bossage (91) vers l'élément mobile (50), une première portion de bras (93) qui s'étend depuis la portion de plaque de base (92) vers un côté de l'élément mobile (50), une deuxième portion de bras (94) qui s'étend depuis la portion de plaque de base (92) vers un côté de l'élément mobile (50) et située sur un côté opposé à la première portion de bras (93) par rapport à l'élément mobile (50), et une portion coulissante (95) entre la première portion de bras (93) et la deuxième portion de bras (94) de la portion de plaque de base (92), dans laquelle la portion coulissante (95) est configurée pour coulisser sur l'élément mobile (50) ;
une dimension (91L) de la portion de bossage (91) en direction axiale du deuxième axe rotatif (42) est supérieure à une dimension (92L) de la portion de plaque de base (92) en direction axiale du deuxième axe rotatif (42) ;
un passage d'alimentation d'huile (103) configuré pour le passage d'huile est formé à l'intérieur de l'axe de la fourchette de changement de rapport (100) ; et
la fourchette de changement de rapport (90) comprend :
un trou d'huile (97) qui s'étend en direction radiale de la portion de bossage (91) à travers la portion de bossage (91) de manière à communiquer avec le passage d'alimentation d'huile (103),
**caractérisée en ce que** la fourchette de changement de rapport (90) comprend en outre :
une portion renfoncée (160) formée dans la portion de plaque de base (92), dans laquelle la portion renfoncée (160) se trouve à l'extérieur en direction radiale de la portion de bossage (91) par rapport au trou d'huile (97) et s'étend depuis le trou d'huile (97) vers la portion coulissante (95), et la portion renfoncée (160) est renfoncée en direction axiale de la portion de bossage (91) .

2. Transmission (40) selon la revendication 1, **caractérisée en ce que** la portion renfoncée (160) comprend une première portion renfoncée (161) située à l'extérieur en direction radiale de la portion de bossage (91) par rapport au trou d'huile (97), et une deuxième portion renfoncée (162) qui s'étend depuis la première portion renfoncée (161) vers la portion coulissante (95) ; et
la profondeur (161H) de la première portion renfoncée (161) est supérieure à la profondeur (162H) de la deuxième portion renfoncée (162).

3. Transmission (40) selon la revendication 2, **caractérisée en ce que** la deuxième portion renfoncée (162) s'étend tout droit en direction radiale de la portion de bossage (91).

4. Transmission (40) selon la revendication 2 ou 3, **caractérisée en ce que** la première portion renfoncée (161) présente une forme hémisphérique.

5. Transmission (40) selon l'une quelconque des revendications 2 à 4, **caractérisée en ce que** la dimension (161L) de la première portion renfoncée (161) en direction radiale de la portion de bossage (91) est supérieure ou égale à deux fois le diamètre (97D) du trou d'huile (97).

6. Transmission (40) selon l'une quelconque des revendications 1 à 5, **caractérisée en ce que** la portion de bossage (91) comprend une surface circonférentielle interne (91a) et une surface circonférentielle externe (91b) ; et
une portion (91ba) de la surface circonférentielle externe (91b) où le trou d'huile (97) est formé est une surface perpendiculaire à la direction radiale de la portion de bossage (91).

7. Transmission (40) selon l'une quelconque des revendications 1 à 6, **caractérisée en ce que** la profondeur maximale (161H) de la portion renfoncée (160) est supérieure ou égale à trois fois le rayon du trou d'huile (97) .

8. Transmission (40) selon l'une quelconque des revendications 1 à 7, **caractérisée en ce que** la dimension maximale (160A) de la portion renfoncée (160) dans une direction perpendiculaire à la direction radiale de la portion de bossage (91) et à la direction axiale de la portion de bossage (91) est supérieure ou égale à deux fois le diamètre (97D) du trou d'huile (97).

9. Transmission (40) selon l'une quelconque des revendications 1 à 8, **caractérisée en ce que** la dimension minimale (160B) de la portion renfoncée (160) dans une direction perpendiculaire à la direction radiale de la portion de bossage (91) et à la direction axiale de la portion de bossage (91) est supérieure au diamètre (97D) du trou d'huile (97).

10. Transmission (40) selon l'une quelconque des revendications 1 à 9, **caractérisée en ce que** la dimension (161L+162L) de la portion renfoncée (160) en direction radiale de la portion de bossage (91) est inférieure à la moitié de la dimension (93L) allant du centre (97c) du trou d'huile (97) à une extrémité distale (93t) de la première portion de bras (93).

11. Transmission (40) selon l'une quelconque des revendications 1 à 10, **caractérisée en ce que** l'élément mobile (50) comprend une surface circonférentielle externe sur laquelle est formée une rainure (59) qui est renfoncée radialement vers l'intérieur en direction radiale du deuxième axe rotatif (42) ;
la portion coulissante (95) comprend une portion de plaque d'engagement en forme de plaque (95P) qui s'étend depuis la portion de plaque de base (92) vers l'élément mobile (50) ;
une portion d'extrémité distale (93P) de la première portion de bras (93), une portion d'extrémité distale (94P) de la deuxième portion de bras (94) et la portion de plaque d'engagement (95P) sont en engagement coulissant avec la rainure (59) de l'élément mobile (50) ; et
la portion de plaque d'engagement (95P) comprend une autre portion renfoncée (163) qui est renfoncée en direction axiale de la portion de bossage (91) et qui s'étend depuis la portion renfoncée (160) vers l'élément mobile (50).

12. Transmission (40) selon la revendication 11, **caractérisée en ce que** l'élément mobile (50) est un élément annulaire agencé concentriquement avec le deuxième axe rotatif (42) ; et
l'élément annulaire est agencé pour ne pas s'engrener avec le premier engrenage (71-76) attaché au premier axe rotatif (41).

13. Transmission (40) selon la revendication 12, **caractérisée en ce que** la portion saillante d'engagement (88) est formée sur le deuxième engrenage (81-86) ; et
la portion renfoncée d'engagement (58) est un trou traversant formé dans l'élément annulaire.

14. Véhicule (1) comprenant :
la transmission (40) selon l'une quelconque des revendications 1 à 13 ;
une source d'entraînement (10) qui est connectée au premier axe rotatif (41) et configurée pour entraîner le premier axe rotatif (41) ;
un élément de transmission de puissance (7) qui est connecté au deuxième axe rotatif (42) ; et
une roue motrice (3) qui est connectée à l'élément de transmission de puissance (7).

15. Motocyclette (1) comprenant :
la transmission (40) selon l'une quelconque des revendications 1 à 13 ;
une roue avant (2), une roue arrière (3) comme roue entraînée, un moteur à combustion interne (10) comme source d'entraînement, et une chaîne (7), une courroie ou un arbre comme élément de transmission de puissance qui est connecté au deuxième axe rotatif (42), dans laquelle la roue arrière (3) est connectée à l'élément de transmission de puissance (7) .
